# EUROPÄISCHE PATENTSCHRIFT

(11) **EP 3 268 630 B1**
(45) Veröffentlichungstag und Bekanntmachung des Hinweises auf die Patenterteilung: **04.03.2020**
(21) Anmeldenummer: 16709770.8
(22) Anmeldetag: 11.03.2016
(51) Int. Cl.: F16F 1/12, F16L 3/205

(54) **FEDERTRÄGER**
SPRING CARRIER
SUPPORT À RESSORT

(30) Priorität: 13.03.2015 DE 102015103716
(43) Veröffentlichungstag der Anmeldung: 17.01.2018
(73) Patentinhaber: Lisega SE, 27404 Zeven (DE)
(72) Erfinder: BERNERT, Jörg, 27404 Zeven-Hofkoh (DE); HEINRICHS, Ekkehard, 27404 Zeven (DE); RADTKE, Arnold, 27404 Zeven (DE)
(74) Vertreter: Lippert Stachow Patentanwälte Rechtsanwälte
(86) Internationale Anmeldenummer: PCT/EP2016/055272
(87) Internationale Veröffentlichungsnummer: WO 2016/146517

(56) Entgegenhaltungen:
- EP-A1- 0 184 404
- FR-A1- 2 365 727
- GB-A- 2 029 928
- US-A- 2 417 154
- US-A- 4 176 815
- US-E- R E22 980

## Beschreibung

Die Erfindung betrifft einen Federträger gemäß dem Oberbegriff von Anspruch 1 sowie ein Verfahren zur Herstellung eines Federträgers gemäß dem Oberbegriff von Anspruch 13.

Gattungsgemäße Federträger werden üblicherweise im Anlagenbau zum federnden Tragen von Rohrleitungen oder Komponenten, wie beispielsweise Ventilen, verwendet. Gattungsgemäße Federträger ermöglichen dabei das federnde Tragen einer Last bis hin zu einer Nennlast, die durch die Konstruktion des jeweiligen Federträgers vorgegeben ist, insbesondere durch die zum Einsatz kommende Feder. Für verschiedene Anwendungsbereiche existieren Federträger mit verschiedenen Nennlasten, typischerweise liegen die Nennlasten gattungsgemäßer Federträger zwischen 0,5 kN und 500 kN. Je nach Anwendungsbereich können gattungsgemäße Federträger als Federhänger oder Federstütze ausgebildet sein. Eine Federstütze ist dazu ausgebildet, auf einem Träger montiert zu werden, wobei die Federstütze ein Trägerelement aufweist, das das obere Ende der Federstütze bildet und auf das eine Last, wie beispielsweise ein Rohr, federnd abgestützt aufgelegt werden kann. Ein Federhänger ist dazu ausgebildet, an einen Träger gehängt zu werden oder auf einen Träger aufgesetzt zu werden, wobei der Federhänger ein Trägerelement aufweist, das das untere Ende des Federhängers bildet, wobei an dem Trägerelement eine Last, wie beispielsweise ein Rohr, federnd abgestützt aufgehängt werden kann.

Gattungsgemäße Federträger umfassen ein Mantelrohr, dessen Zylinderachse sich in einer Längsrichtung erstreckt. In dem Mantelrohr sind in der Längsrichtung zwischen einem oberen und einem unteren Begrenzungselement eine Bodenplatte, eine Federplatte und eine Feder angeordnet, wobei die Feder zwischen Federplatte und Bodenplatte angeordnet ist und Bodenplatte und Federplatte mit einer Federkraft beaufschlagt. Die Federplatte ist mit einem Trägerelement des Federträgers verbunden. Die Begrenzungselemente sind von wesentlicher Bedeutung, da sie den Verschiebeweg in Längsrichtung, den die Federplatte innerhalb des Mantelrohrs durchlaufen kann, begrenzen. Im unbelasteten Zustand nimmt das obere Begrenzungselement die auf die Federplatte wirkende Federkraft auf und das untere Begrenzungselement die auf die Bodenplatte wirkende Federkraft. Im belasteten Zustand wird die Federplatte über das Trägerelement mit einer Last beaufschlagt, so dass die Feder in Längsrichtung komprimiert wird und die Federplatte nicht mehr an dem oberen Begrenzungselement anliegt. Das untere Begrenzungselement nimmt die von der Feder auf die Bodenplatte wirkende Kraft auch im belasteten Zustand auf, wobei sich diese Kraft aus der Federkraft im unbelasteten Zustand und der Gewichtskraft der Last zusammensetzt.

Üblicherweise werden die Begrenzungselemente häufig durch Umformung des Mantelrohrs realisiert. Es sind jedoch auch andere Möglichkeiten zur Realisierung der Begrenzungselemente bekannt, beispielsweise das Anschweißen von Begrenzungselementen an den Innenmantel des Mantelrohrs, beispielsweise das Anschweißen eines Flansches an die Außenseite des Mantelrohrs und das anschließende Verschrauben einer Begrenzungsplatte mit dem Flansch zur Ausbildung eines Begrenzungselements. Dabei wird üblicherweise zuerst das obere Begrenzungselement unter Umformung des Mantelrohrs hergestellt, wonach dann Federplatte, Feder und Bodenplatte in das Mantelrohr eingeführt werden unter Komprimierung der Feder, wonach dann in einem weiteren Umformungsschritt das untere Begrenzungselement in dem Mantelrohr realisiert wird. Hierdurch kann eine zuverlässige Fixierung von Federplatte, Feder und Bodenplatte in dem Mantelrohr erreicht werden. Federträger, die für den Einsatz in geringfügig korrosiven Umgebungen geeignet sein sollen, können vor und/oder nach den Umformungsschritten über einen Farbanstrich oder über eine galvanische Verzinkung gegen Korrosion geschützt werden.

Problematisch ist jedoch die Realisierung von Federträgern für hochgradig korrosive Umgebungen. Bei solchen Federträgern muss das Mantelrohr zwingend mit einer ausreichend dicken Schutzschicht gegen Korrosion versehen werden, was üblicherweise durch Feuerverzinkung erfolgt. Ein Umformen des Mantelrohrs nach dem Aufbringen einer entsprechend dicken Schutzschicht ist nicht mehr möglich, da dies zu einer Zerstörung der Schutzschicht im Bereich der Umformung führen würde. Gleichzeitig ist jedoch das Feuerverzinken des Mantelrohrs nicht mehr möglich, wenn sich die Feder in dem Mantelrohr befindet, da die Federeigenschaften der Feder durch die hohen Temperaturen bei dem Feuerverzinken erheblich beschädigt, wenn nicht gar zerstört werden würden. Bei herkömmlichen Federträgern für stark korrosive Umgebungen weist das Mantelrohr aus diesem Grunde üblicherweise einen Rohrabschnitt und einen an dem unteren Ende des Rohrabschnitts angeschweißten Plattenabschnitt auf, wobei an dem oberen Ende des Rohrabschnitts ein durch Umformung des Rohrabschnitts gebildetes oberes Begrenzungselement angeordnet ist. Bei solchen Federträgern ist die Bodenplatte nicht innerhalb des Mantelrohres angeordnet sondern von unten an den Plattenabschnitt des Mantelrohres geschraubt. Das Mantelrohr kann unproblematisch feuerverzinkt werden, wonach dann die Federplatte und die Feder in das Mantelrohr von unten eingeführt werden können und die Bodenplatte unter Komprimierung der Feder gegen den Plattenabschnitt geschraubt werden kann.

Hierdurch kann zwar ein Federträger mit einer ausreichend dicken Schutzschicht gegen Korrosion hergestellt werden. Eine solche Konstruktion bringt jedoch entscheidende Nachteile mit sich. So verlaufen beispielsweise die Schrauben, mit denen die Bodenplatte gegen den Plattenabschnitt des Mantelrohrs geschraubt wird, zwangsläufig in der Längsrichtung und somit in der Richtung der Kraft, die die Feder auf die Bodenplatte ausübt und die sich aus der Federkraft im unbelasteten Zustand des Federträgers sowie der Gewichtskraft der durch den Federträger federnd getragenen Last zusammensetzt. Dies kann leicht zu einer Überlastung der Schrauben und einer Beschädigung des Federträgers führen. Darüber hinaus ist die Herstellung eines solchen Federträgers aufwendig, da zunächst das Anschweißen eines Plattenabschnitts an einen Rohrabschnitt zur Realisierung des Mantelrohrs und anschließend ein aufwendiges Verschrauben von Bodenplatte zum Plattenabschnitt erforderlich sind. In EP 0 184 404 A1, die als naheliegendster Stand der Technik betrachtet wird, ist beispielsweise ein Federträger offenbart, der ein Mantelrohr aufweist, in dem als von dem Mantelrohr separate Bauteile eine obere Platte und eine untere Platte angeordnet sind. An der oberen Platte kann der Federträger aufgehängt werden, an der unteren Platte ist eine Spiralfeder abgestützt, über die eine Last federnd getragen werden kann. Sowohl die obere Platte als auch die untere Platte sind jeweils an in dem Mantelrohr vorgesehenen Vorsprüngen abgestützt, wobei die obere Platte durch Stifte gegen ein Verdrehen gesichert ist, die durch Durchführungen des Mantelrohrs hindurch seitlich in die Platte eingebracht sind. In US 2,417,154 A ist ein Federträger offenbart, der ein Mantelrohr aufweist, das an einem Ende durch eine als separates Bauteil ausgeführte Endkappe abgeschlossen ist. An der Endkappe stützen sich Federn ab, über die eine Last federnd getragen werden kann. Die Endkappe weist mehrere umfänglich voneinander beabstandete Vorsprünge auf und ist über diese Vorsprünge dadurch in dem Mantelrohr gehalten, dass sich diese Vorsprünge der Endkappe an Vorsprüngen, die in dem Mantelrohr vorgesehen sind, abstützen. An dem Mantelrohr sind ferner Führungsrippen vorgesehen, die an den Vorsprüngen der Endkappe anliegen und ein Verdrehen der Endkappe und somit ein Lösen der Endkappe vom Mantelrohr verhindern. In FR 2 365 727 A1 ist ein Federträger offenbart, der als Federstütze ausgebildet ist. In US 4,176,815 A ist ein Federträger offenbart, der ein Mantelrohr umfasst, das an einem Ende durch eine Bodenplatte verschlossen ist, an der sich eine Spiralfeder zum Tragen einer Last abstützt. Die Bodenplatte ist als separates Bauteil ausgebildet und mittels eines Bajonettverschlusses in dem Mantelrohr gehalten. In GB 2 029 928 A ist ein Federträger offenbart, der ein Mantelrohr umfasst, in dem als separate Bauteile ein unterer und ein oberer Druckring angeordnet sind, wobei zwischen den Druckringen Scheibenfedern angeordnet sind. Der untere Druckring ist an in dem Mantelrohr vorgesehenen Vorsprüngen abgestützt, und der obere Druckring ist in dem Mantelrohr gehalten, indem unter Aufrechterhaltung eines Drucks auf den oberen Druckring das Mantelrohr oberhalb des Druckrings eingepresst wird. In US Re. 22,980 E ist ein Federträger offenbart, der ein Mantelrohr aufweist, in dem eine obere und eine untere Platte angeordnet sind, wobei sowohl die obere als auch die untere Platte mit dem Mantelrohr verschweißt sind.

Der vorliegenden Erfindung liegt die Aufgabe zugrunde, einen Federträger bereitzustellen, der zumindest einen der oben beschriebenen Nachteile herkömmlicher Federträger zumindest teilweise behebt. Ferner liegt der vorliegenden Erfindung die Aufgabe zugrunde, ein Verfahren zur Herstellung eines Federträgers bereitzustellen, das zumindest einen der oben beschriebenen Nachteile zumindest teilweise behebt.

Als eine Lösung der der Erfindung zugrundeliegenden Aufgabe schlägt die vorliegende Erfindung einen Federträger mit den Merkmalen von Anspruch 1 vor. Der Federträger ist zur Verwendung im Anlagenbau zum federnden Tragen einer Last geeignet und umfasst ein Mantelrohr, das nach Art eines Hohlzylinders ausgebildet ist. Die Zylinderachse des Hohlzylinders erstreckt sich in einer Längsrichtung und der Innenmantel des Hohlzylinders umgibt einen lichten Rohrquerschnitt. In einer Ausführungsform ist der lichte Rohrquerschnitt über mindestens 80 % der Erstreckung des Mantelrohrs in der Längsrichtung konstant. In einer Ausführungsform kann das Mantelrohr Stufen aufweisen, wobei sich der lichte Rohrquerschnitt stufenweise verändert. Wesentlich ist, dass das Mantelrohr einen Innenmantel aufweist, der den lichten Rohrquerschnitt umgibt, wodurch die hohlzylinderartige Form, insbesondere die Form eines geraden Hohlzylinders, gegeben ist. Der Innenmantel kann den lichten Rohrquerschnitt in einer Ausführungsform vollständig geschlossen umgeben. In einer Ausführungsform weist der Innenmantel Aussparungen auf, so dass er den lichten Rohrquerschnitt des Mantelrohrs nicht vollständig geschlossen umgibt. An seiner Außenseite kann das Mantelrohr verschiedenartige Ausgestaltungen aufweisen. Beispielsweise kann das Mantelrohr an seiner Außenseite Vorsprünge aufweisen. Beispielsweise kann das Mantelrohr einen Rohrabschnitt und insbesondere eine Standplatte umfassen, wobei der Rohrabschnitt sich insbesondere in der Längsrichtung erstreckt und über seine Abschnittslänge in Längsrichtung einen konstanten lichten Rohrquerschnitt aufweist, wobei insbesondere die Standplatte an einem Ende in Längsrichtung des Rohrabschnitts angeordnet ist und eine Aussparung aufweist, die fluchtend zu dem lichten Rohrquerschnitt des Rohrabschnitts angeordnet ist, so dass die Standplatte im Bereich der Aussparung einen Abschnitt des Innenmantels des Mantelrohrs bildet. In einer Ausführungsform besteht das Mantelrohr aus einem Röhrabschnitt. In einer Ausführungsform besteht das Mantelrohr aus Stahl. In einer Ausführungsform ist das Mantelrohr feuerverzinkt. Das Mantelrohr kann eine Erstreckungslänge in Längsrichtung zwischen ca. 150 mm und 1500 mm aufweisen.

Der erfindungsgemäße Federträger weist eine Federplatte, eine Bodenplatte und eine Feder auf. In einer Betriebssituation des Federträgers sind die Federplatte, die Bodenplatte und die Feder innerhalb des Mantelrohrs und in der Längsrichtung zwischen einem oberen und einem unteren Begrenzungselement angeordnet, wobei die Feder in der Längsrichtung zwischen der Bodenplatte und der Federplatte angeordnet ist und die Federplatte und die Bodenplatte jeweils mit einer parallel zur Längsrichtung wirkenden Federkraft beaufschlagt. Die Federplatte ist mit einem Trägerelement zum federnden Tragen eines Bauelements verbunden und innerhalb eines durch die Begrenzungselemente begrenzten Verschiebebereich in der Längsrichtung verschiebbar. Die Begrenzungselemente können fest mit dem Mantelrohr verbunden, insbesondere einstückig in das Mantelrohr integriert sein. Die Begrenzungselemente geben dabei eine Grenze des Verschiebebereichs vor, da Bodenplatte und Federplatte in Längsrichtung maximal voneinander entfernt sind, wenn die Bodenplatte durch die Feder gegen das untere Begrenzungselement und die Federplatte durch die Feder gegen das obere Begrenzungselement gepresst werden. Diese Situation entspricht der unbelasteten Betriebssituation des Federträgers. Bei einer Belastung des Trägerelements mit einer ausreichend schweren Last, was einer Betriebssituation im belasteten Zustand des Federträgers entspricht, kann die Feder zwischen Bodenplatte und Federplatte komprimiert werden, so dass sich die Federplatte der Bodenplatte annähert. In einer Ausführungsform kann das obere Begrenzungselement über eine Umformung des Mantelrohrs an seinem oberen Ende hergestellt sein. Beispielsweise kann das obere Begrenzungselement aus einem durch Umformung des Mantelrohrs entstandenen Vorsprung bestehen. Beispielsweise kann eine Anschlussplatte zwischen dem oberen Begrenzungselement und der Federplatte angeordnet sein, wobei in der unbelasteten Betriebssituation die Federplatte an der Anschlussplatte anliegt und über die Federkraft eine Kraft auf die Anschlussplatte zum oberen Begrenzungselement hin ausübt.

Erfindungsgemäß weist das untere Begrenzungselement eine Vorsprungsanordnung mit Haltevorsprüngen auf, die an dem Innenmantel des Mantelrohrs angeordnet sind, wobei die Bodenplatte an ihrer zum Innenmantel des Mantelrohrs weisenden Außenseite eine Ausnehmungsanordnung aufweist. Die Vorsprungsanordnung und die Ausnehmungsanordnung sind dergestalt miteinander korrespondierend ausgebildet, dass in einer Montagesituation, in der die Bodenplatte in einer ersten Winkelstellung relativ zum Mantelrohr bezogen auf eine Rotation um die Zylinderachse innerhalb des Mantelrohres angeordnet ist, die Vorsprungsanordnung senkrecht zur Längsrichtung vollständig neben der Bodenplatte anordenbar ist, und in der Betriebssituation, in der die Bodenplatte in einer zweiten Winkelstellung relativ zum Mantelrohr angeordnet ist, die Vorsprungsanordnung senkrecht zur Längsrichtung mit der Bodenplatte überlappt zum Aufnehmen einer von der Feder auf die Bodenplatte wirkenden Kraft.

In einer Ausführungsform sind die Haltevorsprünge durch eine Umformung des Mantelrohrs hergestellt. In einer Ausführungsform sind die Haltevorsprünge durch einen Stanz- und Umformungsschritt des Mantelrohrs hergestellt. In einer Ausführungsform sind die Haltevorsprünge durch die Form einer Aussparung einer Platte gebildet, die von dem Mantelrohr umfasst ist und die einstückig mit einem Rohrabschnitt des Mantelrohrs verbunden ist, beispielsweise verschweißt ist. Die Ausnehmungsanordnung ist durch die Ausgestaltung der zum Innenmantel des Mantelrohrs weisenden Außenseite der Bodenplatte gebildet. In einer Ausführungsform ist die Ausnehmungsanordnung durch die Ausgestaltung der Bodenplatte mit einem Querschnitt senkrecht zur Längsrichtung nach Art eines Vielecks gewährleistet. In einer Ausführungsform ist die Ausnehmungsanordnung dadurch gewährleistet, dass die Bodenplatte so ausgebildet ist, dass um ihren Querschnitt senkrecht zur Längsrichtung ein Kreis als Einhüllende gelegt werden kann, wobei Ausnehmungen als Randausnehmungen vorgesehen sind, wobei der Querschnitt im Bereich dieser Randausnehmungen von der Kreisform abweicht, indem im Bereich der Randausnehmung die Strecke zwischen Kreismittelpunkt und Außenseite kleiner ist als der Radius des Kreises.

Durch die korrespondierende Ausgestaltung von Vorsprungsanordnung und Ausnehmungsanordnung ist gewährleistet, dass die Bodenplatte in der Montagesituation von außerhalb des Mantelrohrs von unten in das Mantelrohr eingebracht und an der Vorsprungsanordnung entlang der Längsrichtung vorbeigeführt werden kann, da in der Montagesituation die Vorsprungsanordnung senkrecht zur Längsrichtung vollständig neben der Bodenplatte anordenbar ist. Dagegen gewährleistet die korrespondierende Ausgestaltung von Ausnehmungsanordnung und Vorsprungsanordnung gleichzeitig, dass in der Betriebssituation, die sich von der Montagesituation insbesondere alleine durch eine Rotation der Bodenplatte relativ zum Mantelrohr um die Zylinderachse um die Winkeldifferenz zwischen erster und zweiter Winkelstellung unterscheidet, die Vorsprungsanordnung senkrecht zur Längsrichtung mit der Bodenplatte überlappt, so dass die Haltevorsprünge der Vorsprungsanordnung die Kraft aufnehmen können, die von der Feder auf die Bodenplatte in der Betriebssituation wirkt. Die Vorsprungsanordnung mit ihren Haltevorsprüngen wirkt somit in der Betriebssituation als unteres Begrenzungselement, das gemeinsam mit dem oberen Begrenzungselement die maximale Entfernung der Bodenplatte von der Federplatte in der Betriebssituation festlegt.

In einer Ausführungsform kann die Vorsprungsanordnung so ausgebildet sein, dass sie in der Betriebssituation umfänglich verteilt mit der Bodenplatte senkrecht zur Längsrichtung überlappt, so dass ein umfängliches Aufnehmen der auf die Bodenplatte wirkenden Kraft gewährleistet ist, die die Feder in der Betriebssituation auf die Bodenplatte ausübt. Diese Kraft ist in der unbelasteten Betriebssituation ausschließlich durch die Ausgestaltung der Feder und den Abstand zwischen Federplatte und Bodenplatte festgelegt. In einer Betriebssituation unter Last ist die auf diese Bodenplatte wirkende Kraft durch die Summe aus der Federkraft in der unbelasteten Betriebssituation und der Gewichtskraft, die an dem Trägerelement durch eine Last anliegt, gegeben. In einer Ausführungsform ist der Federträger abwechselnd in die Montagesituation und in die Betriebssituation bringbar. In einer Ausführungsform befindet sich der Federträger während seiner Herstellung zumindest einmal in der Montagesituation und wird während der Herstellung in seine Betriebssituation mit der zweiten Winkelstellung von Bodenplatte relativ zum Mantelrohr gebracht, wobei die Betriebssituation gesichert wird, beispielsweise durch Setzen eines Schweißpunkts zwischen Bodenplatte und Mantelrohr, so dass der hergestellte Federträger nicht mehr ohne Weiteres in die Montagesituation gebracht werden kann.

Der erfindungsgemäße Federträger bringt verschiedene Vorteile mit sich. Zum einen können Mantelrohr und/oder Bodenplatte, und insbesondere Federplatte, unabhängig voneinander und gerade auch unabhängig von der Feder verzinkt werden, so dass auch eine Feuerverzinkung zur Herstellung einer ausreichend dicken Schutzschicht ermöglicht ist. Zum anderen ist eine besonders einfache und kostengünstige Herstellung des Federträgers ermöglicht, da kein kompliziertes Verschrauben zur Herstellung erforderlich ist, sondern Federplatte, Feder und Bodenplatte einfach in das Mantelrohr eingebracht werden können und alleine durch Verdrehen der Bodenplatte in dem Mantelrohr gesichert werden können. Darüber hinaus kann durch die Vorsprungsanordnung ein besonders robustes unteres Begrenzungselement bereitgestellt werden, das sehr belastbar und haltbar ist.

In einer Ausführungsform weist die Vorsprungsanordnung mehrere jeweils durch einen Haltevorsprungs-Winkelabstand voneinander beabstandete Haltevorsprünge auf. In einer mit dieser Ausführungsform kombinierbaren Ausführungsform weist die Ausnehmungsanordnung mehrere jeweils durch einen Ausnehmungs-Winkelabstand voneinander beabstandete Ausnehmungen auf. Ein bestimmter Haltevorsprungs-Winkelabstand ist stets einem bestimmten Paar benachbarter Haltevorsprünge zugeordnet, wobei in einer Ausführungsform der Haltevorsprungs-Winkelabstand für jedes Paar an Haltevorsprüngen identisch ist, so dass sämtliche benachbarte Haltevorsprünge denselben Haltevorsprungs-Winkelabstand zueinander aufweisen, wobei in einer anderen Ausführungsform der Haltevorsprungs-Winkelabstand in Abhängigkeit von dem jeweiligen Paar an Haltevorsprüngen variieren kann. Ein bestimmter Ausnehmungs-Winkelabstand ist stets einem bestimmten Paar benachbarter Ausnehmungen zugeordnet, wobei in einer Ausführungsform der Ausnehmungs-Winkelabstand für jedes Paar an Ausnehmungen identisch ist, so dass sämtliche benachbarte Ausnehmungen denselben Ausnehmungs-Winkelabstand zueinander aufweisen, wobei in einer anderen Ausführungsform der Ausnehmungs-Winkelabstand in Abhängigkeit von dem jeweiligen Paar an Ausnehmungen variieren kann. Die Ausnehmungsanordnung der Bodenplatte ist dadurch gebildet, dass die Bodenplatte in ihrem Querschnitt senkrecht zur Längsrichtung so ausgebildet ist, dass der Radius der Bodenplatte, der als Erstreckungslänge zwischen dem Mittelpunkt der Bodenplatte und der zum Innenmantel des Mantelrohrs weisenden Außenseite definiert ist, in Abhängigkeit von einem Rotationswinkel um die Längsrichtung variiert, so dass der Radius als Funktion in Abhängigkeit von dem Rotationswinkel ausgedrückt werden kann, wobei der Ort einer Ausnehmung durch ein lokales Minimum dieser Funktion definiert sein kann und der Ausnehmungs-Winkelabstand zwischen zwei Ausnehmungen durch den Winkelabstand zwischen den Orten der beiden Ausnehmungen definiert sein kann. Der Mittelpunkt des Querschnitts der Bodenplatte kann beispielsweise mit dem Schwerpunkt der Bodenplatte zusammenfallen, und/oder die Zylinderachse kann durch den Mittelpunkt hindurchtreten. Auf entsprechende Art und Weise verursacht die Vorsprungsanordnung des Mantelrohrs eine Variation des lichten Rohrquerschnitts, so dass der Radius des Rohrquerschnitts, der durch den Abstand zwischen Zylinderachse und Innenmantel senkrecht zur Längsrichtung festgelegt ist, in Abhängigkeit von einem Rotationswinkel um die Zylinderachse variiert, wobei die Vorsprünge an den Orten angeordnet sind, an denen die Funktion des Radius in Abhängigkeit von dem Rotationswinkel ein lokales Minimum aufweist, wobei der Haltevorsprungs-Winkelabstand durch den Winkelabstand zwischen den lokalen Minima des Radius des lichten Rohrquerschnitts festgelegt sein kann.

In einer Ausführungsform sind die Ausnehmungen regelmäßig über die Außenseite der Bodenplatte verteilt, wobei insbesondere der Ausnehmungs-Winkelabstand zwischen sämtlichen benachbarten Ausnehmungen identisch ist. Alternativ oder zugleich können die Haltevorsprünge umfänglich regelmäßig über den Innenmantel des Mantelrohres verteilt sein, wobei insbesondere der Haltevorsprungs-Winkelabstand zwischen sämtlichen benachbarten Haltevorsprüngen identisch sein kann. Die regelmäßige Verteilung der Haltevorsprünge kann den Vorteil mit sich bringen, dass die Bodenplatte in der Betriebssituation umfänglich regelmäßig von den Haltevorsprüngen gehalten werden kann, so dass eine umfänglich regelmäßige Kraftableitung von der Bodenplatten auf die Haltevorsprünge erfolgen kann, wodurch die Bodenplatte besonders stabil durch das durch die Vorsprungsanordnung gebildete untere Begrenzungselement an ihrem Platz gehalten sein kann, während sie durch die Feder mit einer Kraft belastet ist. Die regelmäßige Verteilung der Ausnehmungen kann den Vorteil mit sich bringen, dass die Bodenplatte besonders einfach zum Erreichen der Montagesituation ausgerichtet werden kann und somit an den Haltevorsprüngen vorbei in das Mantelrohr eingeführt werden kann. Besonders bevorzugt beträgt der Ausnehmungs-Winkelabstand und/oder der Haltevorsprungs-Winkelabstand mindestens 60°, insbesondere einen Winkel zwischen 90° und 150°. Dadurch kann gleichzeitig eine umfängliche Unterstützung der Bodenplatte durch die Vorsprungsanordnung und ein einfaches Einführen der Bodenplatte in das Montagerohr in der Montagesituation gewährleistet sein.

In einer Ausführungsform ist die Anzahl der Haltevorsprünge höchstens so groß wie die Anzahl der Ausnehmungen, wobei die Anzahl der Haltevorsprünge insbesondere der Anzahl der Ausnehmungen entsprechen kann. Dadurch ist der Zusammenbau des Federträgers besonders vereinfacht, da die Montagesituation durch einfache Ausrichtung der Bodenplatte zum Mantelrohr erreicht werden kann, und darüber hinaus kann eine zuverlässige Kraftableitung von der Bodenplatte auf die Haltevorsprünge in der Betriebssituation gewährleistet sein. Besonders bevorzugt beträgt die Anzahl der Haltevorsprünge und/oder die Anzahl der Ausnehmungen mindestens drei, insbesondere genau drei, insbesondere zwischen drei und fünf, wobei insbesondere die Ausnehmungen und/oder die Haltevorsprünge jeweils identisch ausgebildet sind und jeweils um denselben Winkelabstand voneinander beabstandet sind. Die Erfinder haben erkannt, dass über die angegebene Begrenzung der Anzahl der Haltevorsprünge und/oder Ausnehmungen eine besonders robuste Bodenplatte und ein besonders robustes Mantelrohr realisiert werden können, was eine robuste Ausgestaltung des Federträgers insgesamt ermöglicht, und dass darüber hinaus eine besonders einfache Ausrichtung der Bodenplatte zum Mantelrohr zum Erreichen der Betriebssituation und der Montagesituation möglich ist.

Vorzugsweise weisen die Haltevorsprünge und/oder die Ausnehmungen einen kreissegmentförmigen Querschnitt senkrecht zur Längsrichtung auf. Der kreissegmentförmige Querschnitt ist durch den kreissegmentförmigen Verlauf der Außenseite der Bodenplatte im Winkelbereich einer Ausnehmung bzw. durch den kreissegmentförmigen Verlauf des Innenmantels im Winkelbereich eines Haltevorsprungs gebildet. Hierdurch können die Haltevorsprünge besonders robust ausgeführt sein und eine Ausrichtung von Bodenplatte zu Mantelrohr besonders vereinfacht sein. Besonders bevorzugt sind die Haltevorsprünge so ausgebildet, dass jeder Haltevorsprung an seiner Oberseite eine sich senkrecht zur Längsrichtung erstreckende Auflagefläche ausbildet, wobei insbesondere die Auflageflächen sämtlicher Haltevorsprünge in derselben Ebene liegen. Besonders bevorzugt ist zumindest einer, insbesondere die Mehrzahl der Haltevorsprünge hergestellt, indem in einem ersten Schritt das Mantelrohr senkrecht zur Längsrichtung abschnittsweise eingeschnitten wird, beispielsweise durch einen Stanzschritt, wobei in einem nachfolgenden Schritt ein Umformungsabschnitt des Mantelrohrs unterhalb des Schnitts umgeformt wird, so dass die geschnittene Oberseite des Umformungsabschnitts die Auflagefläche des Haltevorsprungs bildet. Hierdurch kann ein Haltevorsprung besonders einfach und besonders robust und präzise hergestellt werden. Besonders bevorzugt ist die Auflagefläche zumindest eines, insbesondere der Mehrzahl der Haltevorsprünge als Segment eines Kreisrings ausgebildet, wobei insbesondere die Dicke des Kreisrings identisch mit der Wandstärke des Mantelrohres sein kann.

In einer Ausführungsform weist das Mantelrohr einen kreisförmigen Querschnitt auf, wobei insbesondere der Querschnitt der Bodenplatte als Einhüllende eine Kreisform aufweist, wobei die Ausnehmungen durch Kreisbogenabschnitte der einhüllenden Kreisform voneinander beabstandet sind. Der Winkelbereich, über den sich eine Ausnehmung erstreckt, ist dabei darüber festgelegt, dass der Radius der Bodenplatte in dem Winkelbereich kleiner ist das der Radius der Einhüllenden. Das Vorsehen des Mantelrohrs mit einem kreisförmigen Querschnitt ermöglicht.eine einfache Rotation der Bodenplatte um die Zylinderachse zum Einstellen der ersten und der zweiten Winkelstellung relativ zum Mantelrohr. Die Ausbildung der Bodenplatte dergestalt, dass ihr Querschnitt als Einhüllende eine Kreisform aufweist, kann zu der leichten Einstellung der Winkelstellungen in Verbindung mit dem Vorsehen eines kreisförmigen Querschnitts des Mantelrohrs besonders bevorzugt beitragen. Die Ausnehmungen können durch Kreisbogenabschnitte der einhüllenden Kreisform voneinander beabstandet sein, wobei sich eine bestimmte Ausnehmung über einen Winkelabschnitt zwischen zwei Kreissegmenten der Einhüllenden erstrecken kann, wobei als Ort der Ausnehmung die Mitte des Winkelbereichs definiert sein kann, wobei der Ausnehmungs-Winkelabstand über den entsprechenden durch einen Rotationswinkel um die Zylinderachse festgelegten Winkelabstand zwischen den Orten definiert sein kann.

Erfindungsgemäß ist innerhalb des Mantelrohres und von der Vorsprungsanordnung nach oben versetzt zumindest ein Verriegelungsvorsprung angeordnet, wobei die Bodenplatte an ihrer zum Innenmantel des Mantelrohres weisenden Außenseite zumindest zwei in einem Verriegelungs-Winkelabstand voneinander beabstandete

Verriegelungsausnehmungen aufweist. Der Verriegelungsvorsprung und die beiden Verriegelungsausnehmungen sind dergestalt miteinander korrespondierend ausgebildet, dass in der Montagesituation der Verriegelungsvorsprung senkrecht zur Längsrichtung innerhalb einer ersten der beiden Verriegelungsausnehmungen angeordnet ist, und in der Betriebssituation der Verriegelungsvorsprung innerhalb einer zweiten der Verriegelungsausnehmungen angeordnet ist. Bei einer Anordnung des Verriegelungsvorsprungs "innerhalb" einer Verriegelungsausnehmung senkrecht zur Längsrichtung ist dabei stets die Bodenplatte senkrecht zur Längsrichtung neben dem Verriegelungsvorsprung angeordnet. In der Montagesituation kann der Verriegelungsvorsprung je nach Position der Bodenplatte entlang der Längsrichtung relativ zum Mantelrohr auf Höhe der Bodenplatte oder entlang der Längsrichtung zur Bodenplatte versetzt angeordnet sein. Durch die Anordnung des Verriegelungsvorsprungs senkrecht zur Längsrichtung innerhalb der ersten Verriegelungsausnehmung ist eine Verschiebbarkeit der Bodenplatte entlang der Längsrichtung innerhalb des Mantelrohres gewährleistet, ohne dass der Verriegelungsvorsprung die Verschiebbarkeit blockieren kann. In der Betriebssituation, in der die Bodenplatte auf der Vorsprungsanordnung aufliegt, ist der Verriegelungsvorsprung innerhalb der zweiten Verriegelungsausnehmungen und damit auf Höhe der Bodenplatte angeordnet. Die Dicke der Bodenplatte ist somit dergestalt korrespondierend mit dem Abstand zwischen Verriegelungsvorsprung und Vorsprungsanordnung in Längsrichtung, dass der Verriegelungsvorsprung sich in der Betriebssituation auf Höhe der Bodenplatte befindet. Der Abstand beträgt somit insbesondere weniger als die Dicke der Bodenplatte. Verriegelungsvorsprung und zweite Verriegelungsausnehmung sind dabei so zueinander korrespondierend ausgebildet, dass in der Betriebssituation eine Rotation der Bodenplatte durch das Zusammenspiel von Verriegelungsvorsprung und zweiter Verriegelungsausnehmung blockiert ist, da bei dem Versuch einer Verdrehung der Bodenplatte relativ zum Mantelrohr der Verriegelungsvorsprung an den durch die Bodenplatte gebildeten Rändern der Verriegelungsausnehmung, in der der Radius der Bodenplatte ansteigt, anstoßen würde. Ein Wechsel von der Betriebssituation in die Montagesituation ist somit bei der beschriebenen Ausführungsform nur möglich, wenn die Bodenplatte in der Längsrichtung oberhalb des Verriegelungsvorsprungs angeordnet ist. Die beschriebene vorteilhafte Ausführungsform ermöglicht somit neben der besonders einfachen Herstellung des erfindungsgemäßen Federträgers gleichzeitig eine Verriegelung der Winkelstellung der Bodenplatte relativ zum Mantelrohr in der Betriebssituation. Dabei ist zu berücksichtigen, dass in jeder Betriebssituation die Feder stets eine Federkraft auf die Bodenplatte nach unten ausübt, die durch die Vorsprungsanordnung in das Mantelrohr abgeleitet wird. Eine Auslenkung der Bodenplatte von der Vorsprungsanordnung weg nach oben kann somit bei einem normalen Einsatz des Federträgers nicht erfolgen, so dass ein Lösen der Verriegelung der Bodenplatte relativ zum Mantelrohr in einer normalen Betriebssituation ausgeschlossen ist.

Besonders bevorzugt sind die erste und die zweite der Verriegelungsausnehmungen in einem Winkelabschnitt zwischen zwei benachbarten Ausnehmungen angeordnet. Dadurch kann sichergestellt sein, dass der Rotationswinkel zwischen der ersten und der zweiten Winkelstellung wesentlich kleiner als der Ausnehmungs-Winkelabstand der beiden benachbarten Ausnehmungen ist. Zwei Haltevorsprünge, die den beiden benachbarten Ausnehmungen zugeordnet sind, können somit in der Montagesituation senkrecht zur Längsrichtung innerhalb der Ausnehmungen angeordnet sein und können in der Betriebssituation ausreichend von den Ausnehmungen beabstandet angeordnet sein, so dass die den beiden benachbarten Ausnehmungen zugeordneten Haltevorsprünge eine zuverlässige Unterstützung der Bodenplatte in der Betriebssituation bieten können.

In einer Ausführungsform beträgt der Verriegelungs-Winkelabstand zwischen der ersten und der zweiten der Verriegelungsausnehmungen zwischen 0,25 und 0,75, insbesondere 0,5 des Ausnehmungs-Winkelabstands zwischen den beiden benachbarten Ausnehmungen. Besonders bevorzugt kann jeweils der Winkelabstand zwischen einer der benachbarten Ausnehmungen und der ihr benachbarten Verriegelungsausnehmung zwischen 0,2 und 0,4, insbesondere 0,25 des Ausnehmungs-Winkelabstands, und/oder die Hälfte des Verriegelungs-Winkelabstands betragen. Besonders bevorzugt betragen der Ausnehmungs-Winkelabstand zwischen den beiden benachbarten Ausnehmungen 120° und der Verriegelungs-Winkelabstand 60°. Die Erfinder haben erkannt, dass durch das Vorsehen der genannten Winkelabstände eine besonders robuste Ausgestaltung der Bodenplatte und eine besonders zuverlässige Unterstützung der Bodenplatte durch die Vorsprungsanordnung in der Betriebssituation gewährleistet sein kann, da die Haltevorsprünge dann in der Betriebssituation ausreichend weit von Ausnehmungen der Bodenplatte beabstandet sind. Darüber hinaus kann über die symmetrische Ausgestaltung der Abstände, d. h. über das Vorsehen von jeweils demselben Abstand zwischen einer der benachbarten Ausnehmung und der ihr benachbarten Verriegelungsausnehmung sowie dem Vorsehen des Verriegelungs-Winkelabstand als Hälfte des Ausnehmungs-Winkelabstands der benachbarten Ausnehmungen eine besonders einfache Montage bzw. Ausrichtung der Bodenplatte zum Erreichen der ersten Winkelstellung und der zweiten Winkelstellung ermöglicht sein.

In einer Ausführungsform beträgt der Querschnitt des Verriegelungsvorsprungs senkrecht zur Längsrichtung weniger als ein Drittel des mittleren Querschnitts der Haltevorsprünge. Der mittlere Querschnitt der Haltevorsprünge bezeichnet dabei den Mittelwert aus den Querschnitten der Haltevorsprünge, wobei allgemein der Querschnitt eines Vorsprungs über die Fläche definiert sein kann, um die der jeweilige Vorsprung den lichten Rohrquerschnitt senkrecht zur Längsrichtung verringert. Die Erfinder haben erkannt, dass für die Blockierung der Winkelstellung in der Betriebssituation bereits das Vorsehen eines relativ kleinen Verriegelungsvorsprungs genügt, und dass das Vorsehen eines kleinen Verriegelungsvorsprungs gleichzeitig eine besonders stabile Ausführung von Bodenplatte und Mantelrohr ermöglich, wohingegen die Haltevorsprünge ausreichend groß vorgesehen sein müssen, damit sie eine ausreichend gute Unterstützung der Bodenplatte gewährleisten können. Besonders bevorzugt sind die Haltevorsprünge und/oder der Verriegelungsvorsprung als Umformung des Mantelrohrs ausgebildet. Beispielsweise kann der Verriegelungsvorsprung durch einen einzigen Umformungsschritt hergestellt sein. Beispielsweise kann zumindest einer der Haltevorsprünge durch einen wie oben erläuterten Schneide- und Umformungsprozess hergestellt sein.

In einer Ausführungsform ist der Federträger als Federstütze ausgebildet, wobei das Mantelrohr an seinem unteren Ende eine Standplatte aufweist. Die Standplatte weist eine Aussparung auf, die einen Abschnitt des Innenmantels des Mantelrohrs bildet. Die Federplatte, die Feder und die Bodenplatte sind von außen durch die Aussparung in das Mantelrohr einführbar. In der Betriebssituation, in der Federplatte, Feder und Bodenplatte wie erläutert innerhalb des Mantelrohrs angeordnet sind, ragt das an der Federplatte angeordnete Trägerelement vom Inneren des Mantelrohres an dem oberen Ende des Mantelrohrs über das Mantelrohr hinaus. Der als Federstütze ausgebildete Federträger ist somit dazu ausgebildet, über seine Standplatte auf einen Träger, wie beispielsweise einen Boden, aufgesetzt zu werden, wobei auf das Trägerelement von oben eine Last aufgelegt werden kann, die dann durch die Federstütze federnd getragen ist.

In einer Ausführungsform ist an der Bodenplatte ein Führungsrohr angeordnet, das sich in der Betriebssituation von der Bodenplatte aus nach oben erstreckt und das zum Führen des Trägerelements und/oder der Federplatte ausgebildet ist. Das Führungsrohr kann somit Belastungen des Federträgers senkrecht zur Längsrichtung aufnehmen, wodurch eine Beschädigung der Feder effektiv vermieden werden kann. Besonders bevorzugt ist die Vorsprungsanordnung an der Standplatte angeordnet. Dies bringt den Vorteil mit sich, dass die Vorsprungsanordnung besonders einfach bei der Herstellung der Standplatte realisiert sein kann. Das Mantelrohr kann beispielsweise einen Rohrabschnitt und die Standplatte umfassen. Die Standplatte kann beispielsweise an dem Rohrabschnitt einstückig befestigt sein, beispielsweise durch Verschweißen, wobei in der Betriebssituation die Federplatte innerhalb eines Verschiebebereichs in Längsrichtung innerhalb des Rohrabschnitts verschiebbar ist. Der Verriegelungsvorsprung kann beispielsweise an einem Innenmantelabschnitt außerhalb der Standplatte angeordnet sein, beispielsweise über eine Umformung des Rohrabschnitts oberhalb der Standplatte hergestellt sein. In einer Ausführungsform ist der Verriegelungsvorsprung dadurch hergestellt, dass der Rohrabschnitt vor der einstückigen Montage der Standplatte an dem Rohrabschnitt an seinem unteren Ende eingeschnitten wird und sodann im Einschnittsbereich umgeformt wird, wonach dann die Standplatte unten an dem Rohrabschnitt befestigt wird. In einer Ausführungsform ist der Verriegelungsvorsprung als auf der Standplatte montierter Pinn ausgebildet.

In einer Ausführungsform ist der Federträger als Federhänger ausgebildet, wobei die Bodenplatte eine Aussparung aufweist, durch die in der Betriebssituation das Trägerelement vom Inneren des Mantelrohres an dem unteren Ende des Mantelrohres über das Mantelrohr hinausragt. Ein solcher Federhänger kann beispielsweise auf zwei benachbarten Trägern aufgesetzt werden, wobei sich das Trägerelement zwischen den Trägern nach unten erstreckt, so dass an dem Trägerelement eine Last federnd abgestützt aufgehängt werden kann. Ein solcher Federhänger kann alternativ an einem Träger hängend befestigt werden, wobei eine hängende Verbindung zwischen Mantelrohr und Träger hergestellt wird, wonach dann über das nach unten herausragende Trägerelement eine Last federnd getragen werden kann. In einer Ausführungsform ist zwischen der Federplatte und dem oberen Begrenzungselement eine Anschlussplatte vorgesehen, die in der Betriebssituation an dem oberen Begrenzungselement anliegt und über die der Federhänger an einer Aufhängung montierbar ist, beispielsweise an einer Aufhängung eines Trägers. Die Anschlussplatte kann auf herkömmliche Weise hierzu entsprechend ausgebildet sein.

Die Erfindung betrifft ferner ein Verfahren zur Herstellung eines Federträgers. Bei dem erfindungsgemäßen Verfahren werden in einem ersten Schritt in einer Längsrichtung aufeinanderfolgend eine Federplatte, eine Feder und eine Bodenplatte in ein hohlzylinderförmiges Mantelrohr von unten nach oben in der Längsrichtung eingeführt, wobei sich die Zylinderachse des Mantelrohrs in der Längsrichtung erstreckt. Während des ersten Schritts wird die Bodenplatte in einer ersten Winkelstellung relativ zum Mantelrohr bezogen auf eine Rotation um die Zylinderachse gehalten. Dabei ist eine Vorsprungsanordnung, die an dem Innenmantel des Mantelrohrs angeordnet ist, senkrecht zur Längsrichtung vollständig neben der Bodenplatte angeordnet, während die Bodenplatte in das Mantelrohr unter einer Kraftbeaufschlagung entlang der Längsrichtung und unter Komprimierung der Feder gegen ihre Federkraft eingeführt wird, bis sie oberhalb der Haltevorsprünge angeordnet ist. Sodann wird während eines zweiten Schritts die Bodenplatte ausgehend von der ersten Winkelstellung relativ zum Mantelrohr bis zu einer zweiten Winkelstellung verdreht, in der die Vorsprünge senkrecht zur Längsrichtung mit der Bodenplatte überlappen. Selbstverständlich wird die Bodenplatte während des zweiten Schritts weiter mit einer Kraft entlang der Längsrichtung unter Aufrechterhaltung der Komprimierung der Feder beaufschlagt. Sodann wird in einem dritten Schritt die Bodenplatte unter Verringerung der Kraftbeaufschlagung auf der Vorsprungsanordnung abgesetzt. Das erfindungsgemäße Verfahren ermöglicht eine besonders einfache Herstellung eines besonders zuverlässigen Federträgers und bringt weitere Vorteile mit sich, die im Zusammenhang mit dem erfindungsgemäßen Federträger oben erläutert sind. Das erfindungsgemäße Verfahren kann weitere Merkmale aufweisen, die aus der obigen Beschreibung des erfindungsgemäßen Federträgers ersichtlich sind.

Erfindungsgemäß wird während des ersten Schritts die Bodenplatte entlang der Längsrichtung in das Mantelrohr eingeführt, bis sie oberhalb eines verriegelungsvorsprungs angeordnet ist, der an dem Innenmantel des Mantelrohrs oberhalb der Vorsprungsanordnung angeordnet ist. Während des zweiten Schritts wird die Bodenplatte relativ zum Mantelrohr verdreht, bis der Verriegelungsvorsprung senkrecht zur Längsrichtung mit einer Verriegelungsausnehmung der Bodenplatte überlappend angeordnet ist, wobei während des dritten Schritts der Verriegelungsvorsprung so innerhalb der Verriegelungsausnehmung angeordnet wird, dass er senkrecht zur Längsrichtung zwischen Bodenplatte und Mantelrohr eingeschlossen ist. Dadurch ist eine Verdrehung der Bodenplatte nach Durchführung des dritten Schritts ausgeschlossen, ohne dass die Bodenplatte zuvor unter erheblicher Kraftbeaufschlagung entlang der Längsrichtung nach oben von der Vorsprungsanordnung und über den Verriegelungsvorsprung weg verschoben wird. Die Verdrehung der Bodenplatte während des zweiten Schritts ausgehend von der ersten Winkelstellung bis zur zweiten Winkelstellung beträgt vorzugsweise mindestens 30°, insbesondere weniger als 90°, insbesondere zwischen 45° und 75°.

Im Folgenden wird die Erfindung anhand verschiedener Ausführungsbeispiele unter Bezugnahme auf fünf Figuren näher erläutert.

Es zeigen:
- Figur 1:: in einer Prinzipdarstellung eine als Federhänger ausgebildete Ausführungsform des erfindungsgemäßen Federträgers;
- Figur 2:: in einer Prinzipdarstellung die Bodenplatte des Federträgers gemäß Figur 1;
- Figur 3:: in einer Prinzipdarstellung eine Ansicht entlang der Längsrichtung auf das Mantelrohr des Federträgers gemäß Figur 1;
- Figur 4:: in einer Prinzipdarstellung eine Ansicht entlang der Längsrichtung auf den Federträger gemäß Figur 1;
- Figur 5:: in einer Prinzipdarstellung eine weitere, als Federstütze ausgebildete Ausführungsform des erfindungsgemäßen Federträgers.

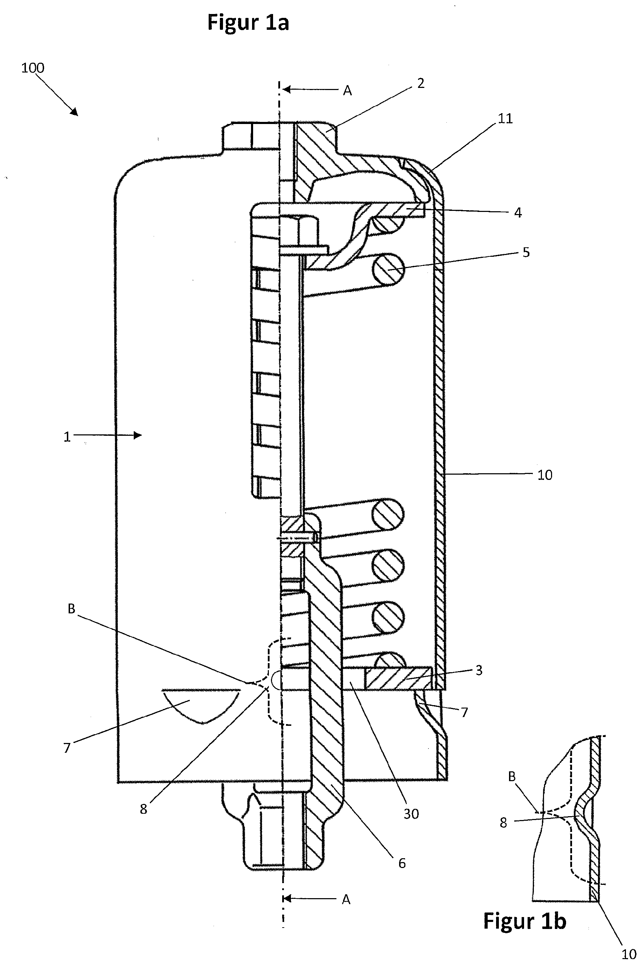

In den Figuren 1 bis 4 ist eine Ausführungsform eines als Federhänger 100 ausgebildeten erfindungsgemäßen Federträgers dargestellt. In Figur 1a ist der Federhänger 100 schematisch in einer Halbschnitt-Darstellung in einer unbelasteten Betriebssituation dargestellt.

Der erfindungsgemäße Federhänger 100 weist ein Mantelrohr 1 auf, das vorliegend aus einem Rohrabschnitt 10 besteht. Der Rohrabschnitt 10 ist nach Art eines Hohlzylinders ausgebildet, dessen Zylinderachse in der Längsrichtung verläuft. An seinem oberen Ende, und damit an seinem ersten Ende in Längsrichtung, ist der Rohrabschnitt 10 umgeformt unter Ausbildung eines oberen Begrenzungselements 11. An seinem unteren Ende, und damit an seinem zweiten Ende in Längsrichtung, weist der Rohrabschnitt 10 Vorsprünge 7 sowie einen Verriegelungsvorsprung 8 auf, die ebenfalls durch Umformung in den Rohrabschnitt 10 selbst eingearbeitet sind. In einer jeden Betriebssituation sind Bodenplatte 3, Feder 5 und Federplatte 4 des Federhängers 100 innerhalb des Mantelrohrs 1 angeordnet, wobei die Feder 5 in der Längsrichtung zwischen Federplatte 4 und Bodenplatte 3 angeordnet ist und Federplatte 4 und Bodenplatte 3 mit einer Federkraft beaufschlagt. Die Federplatte 4 ist mit einem Trägerelement 6 verbunden, das an dem unteren Ende des Mantelrohrs 1 über das Mantelrohr 1 hinausragt. Das Trägerelement 6 ist bei dem Ausführungsbeispiel gemäß Figur 1 als Schraubbolzen-Spannschloss-Kombination ausgebildet. In Figur 1a ist die Betriebssituation des Federhängers 100 im unbelasteten Zustand dargestellt. Im unbelasteten Zustand presst die Feder 5 mit ihrer Federkraft die Federplatte 4 gegen das obere Begrenzungselement 11 und die Bodenplatte 3 gegen die Vorsprünge 7. Dabei wird die Federplatte 4 nicht unmittelbar gegen das obere Begrenzungselement 11 gepresst, sondern zwischen dem oberen Begrenzungselement 11 und der Federplatte 4 ist eine Anschlussplatte 2 angeordnet, über die der Federhänger 100 auf herkömmliche Art und Weise an einem Träger aufgehängt befestigt werden kann. Die Betriebssituation im belasteten Zustand, d. h. in dem Zustand, in dem an dem Trägerelement 6, das mit der Federplatte 4 verbunden ist, eine Last angehängt ist und durch den Federhänger 100 federnd aufgehängt ist, liegt die Federplatte 4 nicht mehr an der Anschlussplatte 2 an sondern wird unter Komprimierung der Feder 5 im Vergleich zum unbelasteten Zustand in Längsrichtung eine Weglänge auf die Bodenplatte 3 hin in Längsrichtung zubewegt. Die Weglänge hängt von der Gewichtskraft der an dem Trägerelement 6 angehängten Last ab.

In Figur 1a ist erkennbar, dass die Vorsprünge 7 jeweils identisch ausgebildet sind und in den Rohrabschnitt 10 des Mantelrohres 1 eingearbeitet sind, indem zuerst ein Schnitt in dem Rohrabschnitt 10 senkrecht zur Längsrichtung vorgenommen wurde und sodann ein Umformungsbereich unterhalb des Schnitts zum Inneren des Rohrabschnitts 10 hin umgeformt wurde. Dadurch bilden die Vorsprünge 7 eine Auflagefläche aus, die sich in einer Ebene senkrecht zur Längsrichtung erstreckt und auf der die Bodenplatte 3 zuverlässig gehalten ist unter Ableitung der durch die Feder 5 auf die Bodenplatte 3 ausgeübten Kraft in das Mantelrohr 1. Diese Federkraft setzt sich im belasteten Zustand des Federhängers 100 aus der Federkraft im unbelasteten Zustand und der Gewichtskraft der Last, die an dem Trägerelement 6 angehängt ist, zusammen. Der Anteil der Federkraft im belasteten Zustand, der auf die Gewichtskraft der an dem Trägerelement 6 befestigten Last zurückgeht, wird von dem Mantelrohr 1 über die an dem Mantelrohr 1 über das obere Begrenzungselement 11 gehaltene Anschlussplatte 2 unmittelbar in den Träger weitergeleitet, an dem der Federhänger 100 befestigt ist. In alternativen Ausführungsformen kann der Federhänger 100 auch ohne die Anschlussplatte 2 auskommen, so dass die Federplatte 4 im unbelasteten Zustand sich unmittelbar an dem oberen Begrenzungselement 11 abstützt. Bei einer solchen alternativen Ausführungsform kann vorgesehen sein, dass der Federhänger 100 nicht selbst an einem Träger aufgehängt wird sondern mit dem unteren Ende seines Rohrabschnitts 10 auf zwei voneinander beabstandete Träger aufgesetzt wird, wobei sich das Trägerelement 6 zwischen den Trägern hindurch nach unten erstreckt. Bei dieser alternativen Ausführungsform kann ebenso ein federnd abgestütztes Aufhängen einer Last an dem Trägerelement 6 erfolgen, wobei dann das Mantelrohr 1 an seiner Unterseite die durch die Last anliegende Gewichtskraft unmittelbar auf die Träger ableitet, auf der der Federhänger 100 aufgesetzt ist.

In Figur 1 ist ferner der Verriegelungsvorsprung 8 detailliert dargestellt. Der Verriegelungsvorsprung 8 ist oberhalb der Haltevorsprünge 7 angeordnet. Die konkrete Ausgestaltung des Verriegelungsvorsprungs 8 ergibt sich aus dem Schnitt A-A des Rohrabschnitts 10 im Bereich B, der in Figur 1b vergrößert dargestellt ist. Der Verriegelungsvorsprung 8 ist durch einfache Umformung des Rohrabschnitts 10 hergestellt und weist die Form eines Kugelabschnitts auf.

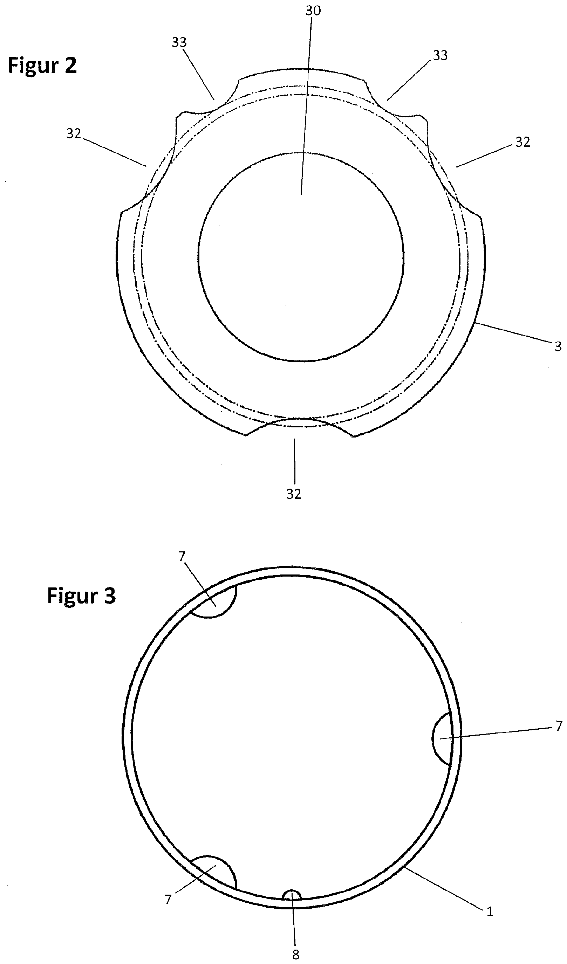

Aus den Figuren 2 bis 4 wird das erfindungsgemäße Prinzip des erfindungsgemäßen Federhängers 100, das eine einfache Herstellung des Federhängers 100 und die Herstellung eines robusten Federhängers 100 ermöglicht, besonders gut deutlich. In Figur 2 ist eine Ansicht auf die Bodenplatte entlang der Längsrichtung, und somit der Querschnitt senkrecht zur Längsrichtung schematisch dargestellt. Der Querschnitt der Bodenplatte weist als Einhüllende eine Kreisform auf, wobei die Ausnehmungen durch Kreisbogenabschnitte der einhüllenden Kreisform voneinander beabstandet sind. Die Ausnehmungen selbst weisen dabei einen kreissegmentförmigen Querschnitt auf und sind jeweils an einem bestimmten Ort bezogen auf einen Rotationswinkel um die Zylinderachse des Mantelrohrs 1, in dem sich die in Figur 2 dargestellte Bodenplatte 3 in der Betriebssituation befindet, angeordnet. Dieser Ort ist durch die Mitte des Winkelabschnitts festgelegt, über den sich die jeweilige Ausnehmung 32 erstreckt. Darüber hinaus ist der Ort durch das lokale Minimum der von dem Rotationswinkel abhängigen Funktion des Radius festgelegt. Aus Figur 2 ist erkennbar, dass die Bodenplatte 3 genau drei Ausnehmungen 32 aufweist, die gemeinsam die Ausnehmungsanordnung der Bodenplatte 3 bilden. Diese drei Ausnehmungen 32 sind jeweils in einem selben Ausnehmungs-Winkelabstand von je 120° voneinander beabstandet. Darüber hinaus weist die Bodenplatte 3 zwei Verriegelungsausnehmungen 33 auf, die in einem Winkelabschnitt zwischen zwei benachbarten Ausnehmungen 32 angeordnet sind. Jede der Verrieglungsausnehmungen 33 ist über einen Winkelabstand von 30° versetzt zu der ihr jeweils benachbarten Ausnehmung 32 angeordnet. Der Verriegelungsabstand zwischen den beiden Verriegelungsausnehmungen 33 beträgt 60°, und damit das Doppelte des Abstands der jeweiligen Verriegelungsausnehmung 33 zu ihrer benachbarten Ausnehmung 32, und die Hälfte des Ausnehmungs-Winkelabstands.

Die Bodenplatte 3 gemäß Figur 2 wird bei der Herstellung des erfindungsgemäßen Federhängers 100 von unten in das Mantelrohr 1 in einer ersten Winkelstellung relativ zum Mantelrohr 1 eingeführt. In Figur 3 ist schematisch vereinfacht eine Ansicht entlang der Längsrichtung von unten auf das Mantelrohr 1 dargestellt, wobei zur Vereinfachung die Darstellung des oberen Begrenzungselements 11 weggelassen wurde. Somit ist in Figur 3 das Mantelrohr 1 mit den durch Umformung in dem Mantelrohr 1 selbst hergestellten Haltevorsprüngen 7 und dem Verriegelungsvorsprung 8 dargestellt.

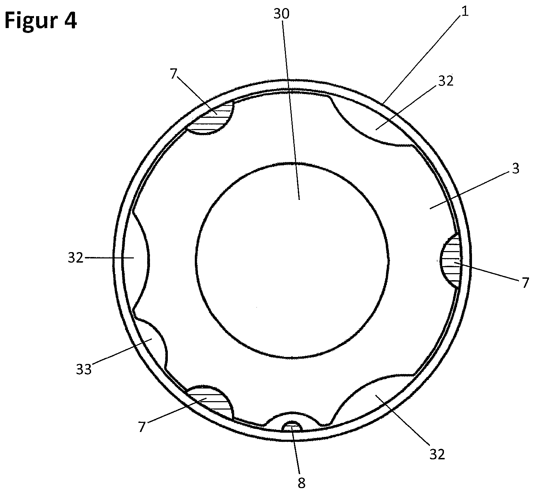

Anhand der schematisch vereinfachten Darstellungen der Figuren 2 und 3 im Zusammenspiel mit der Figur 4 soll das Korrespondieren der Ausnehmungsanordnung der Bodenplatte 3 und der Vorsprungsanordnung des Mantelrohrs 1, das Korrespondieren der Verriegelungsausnehmungen 33 mit dem Verriegelungsvorsprung 8 sowie die erfindungsgemäße korrespondierende Gesamtanordnung von Ausnehmungsanordnung, Vorsprungsanordnung, Verriegelungsanordnung und Verriegelungsausnehmungen, erläutert werden. Die Haltevorsprünge 7 weisen eine Querschnittsfläche senkrecht zur Längsrichtung auf, die geringfügig kleiner ist als die Querschnittsfläche der Ausnehmungen 32 der Bodenplatte 3. Der Verriegelungsvorsprung 8 ist - wie aus Figur 3, in der lediglich die relative Anordnung senkrecht zur Längsrichtung dargestellt ist, nicht zu entnehmen - wie aus Figur 1 zu entnehmen entlang der Längsrichtung oberhalb der Vorsprungsanordnung umfassend die Haltevorsprünge 7 angeordnet. In der Montagesituation ist die Bodenplatte 3 innerhalb des Mantelrohres 1 in einer ersten Winkelstellung relativ zum Mantelrohr 1 angeordnet, wobei die Vorsprungsanordnung, d. h. sämtliche Haltevorsprünge 7, senkrecht zur Längsrichtung vollständig neben der Bodenplatte 3 angeordnet sind, so dass die Bodenplatte 3 unter Komprimierung der Feder 5 beim Zusammenbau des Federhängers 100 entlang der Längsrichtung an der Vorsprungsanordnung 7 vorbei in dem Mantelrohr 1 verschoben werden kann. Bei der Herstellung des erfindungsgemäßen Federhängers 100 wird die Bodenplatte 3 in dieser ersten Winkelstellung von unten in das Mantelrohr 1 eingeführt und über die Vorsprungsanordnung 7 und den Verriegelungsvorsprung 8 hinweg nach oben in dem Mantelrohr 1 verschoben. Dabei ist gleichzeitig der Verriegelungsvorsprung 8 senkrecht zur Längsrichtung innerhalb einer ersten der beiden Verriegelungsausnehmungen 33 angeordnet. Danach wird die Bodenplatte 3 um 60° relativ zur ersten Winkelstellung bis hin zu einer zweiten Winkelstellung verdreht, in der sie sich in der Betriebssituation befindet. Danach wird die Bodenplatte 3 auf den Haltevorsprüngen 7 von oben abgesetzt. In diesem Zustand befindet sich der Federhänger 100 in seiner Betriebssituation. Da die Ausnehmungen 32 und die Haltevorsprünge 7 jeweils um einen Winkelabstand von 120° voneinander beabstandet sind, liegen die Haltevorsprünge 7 in der zweiten Winkelstellung jeweils genau in der Mitte zwischen zwei benachbarten Ausnehmungen 32. Der Verriegelungsvorsprung 8 hingegen liegt auf der Höhe der Bodenplatte 3 innerhalb der zweiten Verriegelungsausnehmung 33, so dass der Verriegelungsvorsprung 8 in der Betriebssituation zwischen Mantelrohr 1 und Bodenplatte 33 eingeschlossen ist. Eine Verdrehung der Bodenplatte 3 relativ zum Mantelrohr 1 in der Betriebssituation ist somit nur in einem sehr kleinen Winkelbereich möglich, nämlich nur, bis der Verriegelungsvorsprung 8 an die Bodenplatte 3 anstößt.

Der Verriegelungsvorsprung 8 im Zusammenspiel mit der zweiten Verriegelungsausnehmung 33 verriegelt somit die Bodenplatte 3 relativ zum Mantelrohr 1 so, dass die Bodenplatte 3 nur in einem sehr geringen Winkelbereich relativ zum Mantelrohr 1 um die Zylinderachse des Federhängers 100 verdrehbar ist. Innerhalb dieses Winkelbereichs liegt die Bodenplatte 3 stets flächig auf sämtlichen Haltevorsprüngen 7 des Mantelrohres 1 auf. Somit ist gewährleistet, dass die Bodenplatte 3 in der Betriebssituation stets zuverlässig auf der Vorsprungsanordnung, die durch die Haltevorsprünge 7 gebildet ist, aufliegt, so dass eine zuverlässige Kraftableitung von der Bodenplatte 3 auf das Mantelrohr 1 gewährleistet ist. Ein Entriegeln der Bodenplatte 3 relativ zum Mantelrohr 1 ist nur möglich, wenn die Bodenplatte 3 nach oben entgegen der Federkraft der Feder 5 so weit von den Haltevorsprüngen 7 entfernt wird, dass sie sich oberhalb des Verriegelungsvorsprungs 8 befindet, wonach sie dann wieder in die erste Winkelstellung relativ zum Mantelrohr 1 gebracht werden kann und somit der Federhänger 100 demontiert werden kann.

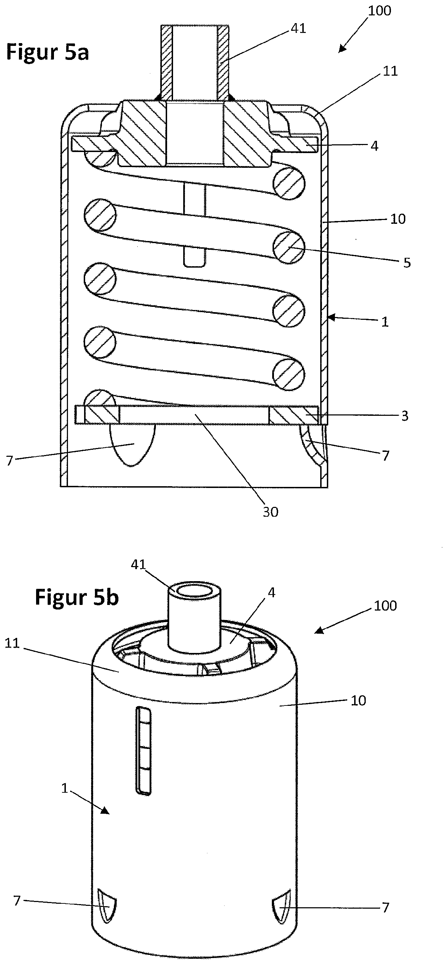

In Figur 5 ist eine alternative Ausführungsform eines erfindungsgemäßen Federhängers 100 in Prinzipdarstellungen schematisch dargestellt. Figur 5a zeigt einen Schnitt durch den erfindungsgemäßen Federhänger 100, Figur 5b eine Aufsicht auf den erfindungsgemäßen Federhänger 100. Der Einfachheit halber ist in Figur 5 das Trägerelement 6 des Federhängers 100 nicht dargestellt. Bei der Ausführungsform gemäß Figur 5 ist das Trägerelement 6 als Schraubbolzen-Mutter-Kombination ausgebildet. Der Schraubbolzen wird von unten durch die Federplatte 4 und das an der Federplatte 4 angeordnete Rohrstück 41 hindurchgesteckt und über eine Mutter und eine Kontermutter oberhalb des Rohrstücks 41 gegen ein Herausgleiten aus dem Rohrstück 41 gesichert. Dabei ragt der Schraubbolzen mit seinem unteren Ende über das untere Ende des Mantelrohrs 1 hinaus, so dass an seinem unteren Ende eine Last befestigt werden kann.

Der Federhänger 100 gemäß Figur 5 unterscheidet sich von dem Federhänger 100 gemäß Figuren 1 bis 4 im Wesentlichen dadurch, dass bei diesem Federhänger 100 keine Anschlussplatte 2 vorgesehen ist sondern stattdessen ein Rohrstück 41 an der Federplatte 4 vorgesehen ist, an dem ein Trägerelement 6 wie erläutert befestigt werden kann. Der Federhänger 100 ist daher dazu ausgebildet, mit dem unteren Ende des Mantelrohres 1 auf zwei voneinander beabstandete Träger aufgesetzt zu werden, so dass sich ein Trägerelement 6, das an dem Rohrstück 41 befestigt ist und an der Unterseite über das Mantelrohr 1 hinausragt, zwischen den Trägern verlaufen kann, so dass an diesem Trägerelement 6 eine Last federnd abgestützt aufgehängt werden kann, während das Mantelrohr 1 die Gewichtskraft der Last auf die Träger überträgt.

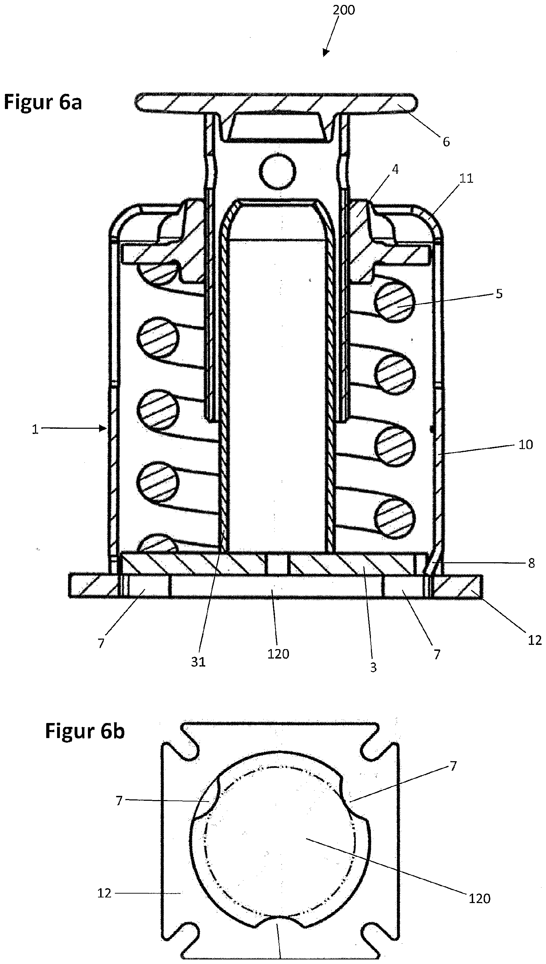

In Figur 6 ist eine alternative Ausführungsform eines erfindungsgemäßen Federträgers in einer Prinzipdarstellung dargestellt, wobei diese Ausführungsform als Federstütze 200 ausgebildet ist. Elemente, die den in den Figuren 1 bis 4 dargestellten Elementen eines erfindungsgemäßen Federhängers 100 ähnlich sind, sind mit denselben Bezugszeichen versehen. In Figur 5a ist eine Schnittdarstellung der erfindungsgemäßen Federstütze 200 schematisch dargestellt. In der Figur 5b ist eine Ansicht auf die Standplatte 12 der Federstütze 200 in der Längsrichtung dargestellt.

Die Federstütze 200 gemäß Figur 6a weist ein Mantelrohr 1 auf, das einen Rohrabschnitt 10 und eine Standplatte 12 umfasst. Der Rohrabschnitt 10 ist - wie bei dem Ausführungsbeispiel gemäß Figur 1 - an seiner oberen Seite umgeformt unter Ausbildung eines oberen Begrenzungselements 11. Ferner weist der Rohrabschnitt 10 an seinem unteren Ende einen Verriegelungsvorsprung 8 auf, der in den Rohrabschnitt 10 dadurch eingearbeitet ist, dass der Rohrabschnitt 10 entlang der Längsrichtung an seinem unteren Ende durch zwei voneinander beabstandete Schnitte eingeschnitten wird, wonach dann der Bereich zwischen den beiden Schnitten zum Inneren des Rohrabschnitts 10 hin umgeformt wird unter Ausbildung des Verriegelungsvorsprungs 8. Der Rohrabschnitt 10 der Federstütze 200 weist jedoch keine Haltevorsprünge 7 auf. Vielmehr sind diese Haltevorsprünge 7 in der Standplatte 12 des Mantelrohrs 1 vorgesehen. Die Standplatte 12 wird unabhängig von dem Rohrabschnitt 10 hergestellt und anschließend an das untere Ende des Rohrabschnitts 10 angeschweißt. Die Standplatte 12, die in Figur 6b detaillierter dargestellt ist, weist eine Aussparung 120 auf, wobei die Standplatte 12 mit ihrer Aussparung 120 einen Abschnitt des Innenmantels des Mantelrohrs 1 bildet. Durch die Ausgestaltung der Aussparung 120 in der Standplatte 12 werden Haltevorsprünge 7 an dem Innenmantel des Mantelrohrs 1 realisiert, die analog zu den Haltevorsprüngen 7 des Federhängers 100 gemäß der Figuren 1 bis 4 ausgebildet sind. In der Federstütze 200 kommt eine Bodenplatte 3 wie in den Figuren 1 bis 4 erläutert zum Einsatz.

Bei dem Zusammenbau der Federstütze 200 gemäß der Figur 6 kann somit wie zu den Figuren 1 bis 4 beschrieben die Bodenplatte 3 von unten in das Mantelrohr 1 eingeführt werden, während sie sich in einer ersten Winkelstellung relativ zum Mantelrohr 1 befindet, in der die Haltevorsprünge 7 senkrecht zur Längsrichtung von der Bodenplatte 3 beabstandet sind. Nach dem Einführen der Bodenplatte 3 oberhalb des Verriegelungsvorsprungs 8 kann dann die Bodenplatte 3 gedreht werden bis zu einer zweiten Winkelstellung relativ zum Mantelrohr 1. In der zweiten Winkelstellung kann dann die Bodenplatte 3 auf die in der Standplatte 12 vorgesehenen Haltevorsprünge 7 aufgesetzt werden, wobei der Verriegelungsvorsprung 8 - wie oben zu den Figuren 2 bis 4 erläutert - innerhalb einer Verriegelungsausnehmung 33 der Bodenplatte 3 angeordnet ist und ein Verdrehen der Bodenplatte 3 relativ zum Mantelrohr 1 verhindert.

Bei der Federstütze 200 gemäß Figur 6 ist ferner an der Bodenplatte 3 ein Führungsrohr 31 angeschweißt, über das der Federträger 6, der über ein Gewinde mit der Federplatte 4 in Längsrichtung relativ zur Federplatte 4 verschiebbar verbunden ist, geführt ist. Das Führungsrohr 31 ist dabei so zur Erstreckung des Trägerelements 6 in der Längsrichtung angepasst, dass der Federträger 6 an dem Führungsrohr 31 entlang gleiten kann, so dass das Führungsrohr 31 Kräfte, die senkrecht zur Längsrichtung auf das Trägerelement 6 wirken, aufnehmen kann, wodurch eine Beschädigung der übrigen Komponenten der Federstütze 200 vermieden werden kann.

### Bezugszeichenliste

- 1: Mantelrohr
- 2: Anschlussplatte
- 3: Bodenplatte
- 4: Federplatte
- 5: Feder
- 6: Trägerelement
- 7: Haltevorsprung
- 8: Verriegelungsvorsprung
- 10: Rohrabschnitt
- 11: oberes Begrenzungselement
- 12: Standplatte
- 30: Aussparung
- 31: Führungsrohr
- 32: Ausnehmung
- 33: Verriegelungsausnehmung
- 41: Rohrstück
- 100: Federhänger
- 120: Aussparung
- 200: Federstütze

## Patentansprüche

1. Federträger (100, 200) zur Verwendung im Anlagenbau zum federnden Tragen einer Last, der Federträger (100, 200) umfassend ein Mantelrohr (1), das nach Art eines Hohlzylinder ausgebildet ist, dessen Zylinderachse sich in einer Längsrichtung erstreckt und dessen Innenmantel einen lichten Rohrquerschnitt umgibt, wobei der Federträger (100, 200) eine Federplatte (4), eine Bodenplatte (3) und eine Feder (5) umfasst, die in einer 3etriebssituation innerhalb des Mantelrohrs (1) und in der Längsrichtung zwischen einem oberen und einem unteren Begrenzungselement angeordnet sind, wobei die Feder (5) in der Längsrichtung zwischen der Bodenplatte (3) und der Federplatte (4) angeordnet ist und die Federplatte (4) und die Bodenplatte (3) jeweils mit einer parallel zur Längsrichtung wirkenden Federkraft beaufschlagt, wobei die Federplatte (4) mit einem Trägerelement (6) zum federnden Tragen eines Bauelements verbunden ist und innerhalb eines durch die Begrenzungselemente begrenzten Verschiebebereichs in Längsrichtung verschiebbar ist,
das untere Begrenzungselement eine Vorsprungsanordnung mit Haltevorsprüngen (7) aufweist, die an dem Innenmantel des Mantelrohrs (1) angeordnet sind, wobei die Bodenplatte (3) an ihrer zum Innenmantel des Mantelrohrs (1) weisenden Außenseite eine Ausnehmungsanordnung aufweist, wobei die Vorsprungsanordnung und die Ausnehmungsanordnung dergestalt miteinander korrespondierend ausgebildet sind, dass in einer Montagesituation, in der die Bodenplatte (3) in einer ersten Winkelstellung relativ zum Mantelrohr (1) bezogen auf eine Rotation um die Zylinderachse innerhalb des Mantelrohrs (1) angeordnet ist, die Vorsprungsanordnung senkrecht zur Längsrichtung vollständig neben der Bodenplatte (3) anordenbar ist, und in der Betriebssituation, in der die Bodenplatte (3) in einer zweiten Winkelstellung relativ zum Mantelrohr (1) angeordnet ist, die Vorsprungsanordnung senkrecht zur Längsrichtung mit.der Bodenplatte (3) überlappt zum Aufnehmen einer von der Feder (5) auf die Bodenplatte (3) wirkenden Kraft,
**dadurch gekennzeichnet, dass**
innerhalb des Mantelrohres (1) und von der Vorsprungsanordnung nach oben versetzt zumindest ein Verriegelungsvorsprung (8) angeordnet ist, wobei die Bodenplatte (3) an ihrer zum Innenmantel des Mantelrohrs (1) weisenden Außenseite zumindest zwei in einem Verriegelungs-Winkelabstand voneinander beabstandete Verriegelungsausnehmungen (33) aufweist, wobei der Verriegelungsvorsprung (8) und die Verriegelungsausnehmungen (33) dergestalt miteinander korrespondierend ausgebildet sind, dass in der Montagesituation der Verriegelungsvorsprung (8) senkrecht zur Längsrichtung innerhalb einer ersten der Verriegelungsausnehmungen (33) angeordnet ist und in der Betriebssituation der Verriegelungsvorsprung (8) innerhalb einer zweiten der Verriegelungsausnehmungen (33) angeordnet ist.

2. Federträger (100, 200) nach Anspruch 1,
**dadurch gekennzeichnet, dass**
die Vorsprungsanordnung mehrere jeweils durch einen Haltevorspungs-Winkelabstand voneinander beabstandete Haltevorsprünge (7) aufweist und/oder die Ausnehmungsanordnung mehrere jeweils durch einen Ausnehumungs-Winkelabstand voneinander beabstandete Ausnehmungen (32) aufweist.

3. Federträger (100, 200) nach Anspruch 2,
**dadurch gekennzeichnet, dass**
die Ausnehmungen (32) regelmäßig über die Außenseite der Bodenplatte (3) verteilt sind, wobei insbesondere der Ausnehmungs-Winkelabstand zwischen sämtlichen benachbarten Ausnehmungen (32) identisch ist, und/oder die Haltevorsprünge (7) umfänglich regelmäßig über den Innenmantel des Mantelrohres (1) verteilt sind, wobei insbesondere der Haltevorspungs-Winkelabstand zwischen sämtlichen benachbarten Haltevorsprüngen (7) identisch ist, wobei insbesondere der Ausnehmungs-Winkelabstand und/oder der Haltevorspungs-Winkelabstand mindestens 60°, insbesondere zwischen 90° und 150° beträgt.

4. Federträger (100, 200) nach einem der vorangehenden Ansprüche,
**dadurch gekennzeichnet, dass**
die Anzahl der Haltevorsprünge (7) und/oder die Anzahl der Ausnehmungen (32) mindestens drei, insbesondere genau drei, und insbesondere maximal fünf beträgt, wobei insbesondere die Ausnehmungen (32) identisch ausgebildet sind und jeweils um denselben Winkelabstand voneinander beabstandet sind.

5. Federträger (100, 200) nach einem der vorangehenden Ansprüche,
**dadurch gekennzeichnet, dass**
die Haltevorsprünge (7) und/oder die Ausnehmungen (32) einen kreissegmentförmigen Querschnitt senkrecht zur Längsrichtung aufweisen.

6. Federträger (100, 200) nach einem der vorangehenden Ansprüche,
**dadurch gekennzeichnet, dass**
das Mantelrohr (1) einen kreisförmigen Querschnitt aufweist, wobei insbesondere der Querschnitt der Bodenplatte (3) als Einhüllende eine Kreisform aufweist, wobei die Ausnehmungen (32) durch Kreisbogenabschnitte der Einhüllenden Kreisform voneinander beabstandet sind.

7. Federträger (100, 200) nach einem der vorangehenden Ansprüche,
**dadurch gekennzeichnet, dass**
die erste und die zweite der Verriegelungsausnehmungen (33) in einem Winkelabschnitt zwischen zwei benachbarten Ausnehmungen (32) angeordnet sind.

8. Federträger (100, 200) nach Anspruch 7,
**dadurch gekennzeichnet, dass**
der Verriegelungs-Winkelabstand zwischen der ersten und der zweiten der Verriegelungsausnehmungen (33) zwischen 0.25 und 0.75, insbesondere 0.5 des Ausnehmungs-Winkelabstands zwischen den beiden benachbarten Ausnehmungen (32) beträgt, wobei jeweils der Winkelabstand zwischen einer der benachbarten Ausnehmungen (32) und der ihr benachbarten Verriegelungsausnehmung (33) zwischen 0.2 und 0.4 dieses Ausnehmungs-Winkelabstands, insbesondere die Hälfte des Verriegelungs-Winkelabstands beträgt, wobei insbesondere der Ausnehmungs-Winkelabstand zwischen den beiden benachbarten Ausnehmungen (32) 120° und der Verriegelungs-Winkelabstand 60° betragen.

9. Federträger (100, 200) nach einem der vorangehenden Ansprüche,
**dadurch gekennzeichnet, dass**
der Querschnitt des Verriegelungsvorsprungs (8) senkrecht zur Längsrichtung weniger als ein Drittel des mittleren Querschnitts der Haltevorsprünge (7) beträgt.

10. Federträger (200) nach einem der vorangehenden Ansprüche,
**dadurch gekennzeichnet, dass**
der Federträger (200) als Federstütze (200) ausgebildet ist, wobei das Mantelrohr (1) an seinem unteren Ende eine Standplatte (12) aufweist, wobei die Standplatte (12) eine einen Abschnitt des Innenmantels bildende Aussparung (120) aufweist, durch die die Federplatte (4), die Feder (5) und die Bodenplatte (3) von außen in das Mantelrohr (1) einführbar sind, wobei das an der Federplatte (4) angeordnete Trägerelement (6) vom Inneren des Mantelrohrs (1) an dem oberen Ende des Mantelrohrs (1) über das Mantelrohr (1) hinausragt, wobei insbesondere an der Bodenplatte (3) ein Führungsrohr(31) angeordnet ist, das sich in der Betriebssituation von der Bodenplatte (3) aus nach oben erstreckt und das zum Führen des Trägerelements (6) und/oder der Federplatte (4) ausgebildet ist, wobei insbesondere die Vorsprungsanordnung an der Standplatte (12) angeordnet und/oder der Verriegelungsvorsprung (8) an einem Innenmantelabschnitt außerhalb der Standplatte (12) angeordnet ist.

11. Federträger (100) nach einem der Ansprüche 1 bis 9, **dadurch gekennzeichnet, dass**
der Federträger (100) als Federhänger (100) ausgebildet ist, wobei die Bodenplatte (3) eine Aussparung (30) aufweist, durch die das Trägerelement (6) vom Inneren des Mantelrohres (1) an dem unteren Ende des Mantelrohres (1) über das Mantelrohr (1) hinausragt, wobei insbesondere zwischen der Federplatte (4) und dem oberen Begrenzungselement (11) eine Anschlussplatte (2) vorgesehen ist, die in der Betriebssituation an dem oberen Begrenzungselement (11) anliegt und über die der Federhänger (100) an einer Aufhängung montierbar ist.

12. Verfahren zur Herstellung eines Federträgers (100, 200), wobei in einem ersten Schritt in einer Längsrichtung aufeinanderfolgend eine Federplatte (4), eine Feder (5) und eine Bodenplatte (3) in ein hohlzylinderförmiges Mantelrohr (1) von unten nach oben eingeführt werden, dessen Zylinderachse sich in der Längsrichtung erstreckt, wobei i) während des ersten Schritts die Bodenplatte (1) in einer ersten Winkelstellung relativ zum Mantelrohr (1) bezogen auf eine Rotation um die Zylinderachse gehalten wird, wobei eine Vorsprungsanordnung, die an dem Innenmantel des Mantelrohrs (1) angeordnet ist, senkrecht zur Längsrichtung vollständig neben der Bodenplatte (3) angeordnet ist, während die Bodenplatte (3) in das Mantelrohr (1) unter einer Kraftbeaufschlagung entlang der Längsrichtung und unter Komprimierung der Feder (5) gegen ihre Federkraft eingeführt wird, bis sie oberhalb der Haltevorsprünge (7) angeordnet ist, wobei
ii) während eines zweiten Schritts die Bodenplatte (3) ausgehend von der ersten Winkelstellung relativ zum Mantelrohr (1) bis zu einer zweiten Winkelstellung verdreht wird, in der die Vorsprünge (7) senkrecht zur Längsrichtung mit der Bodenplatte (3) überlappen, wobei
iii) in einem dritten Schritt die Bodenplatte (3) unter Verringerung der Kraftbeaufschlagung auf der Vorsprungsanordnung abgesetzt wird,
**dadurch gekennzeichnet, dass**
während des ersten Schritts die Bodenplatte (3) entlang der Längsrichtung in das Mantelrohr (1) eingeführt wird, bis sie oberhalb eines Verriegelungsvorsprungs (8) angeordnet ist, der an dem Innenmantel des Mantelrohrs (1) oberhalb der Vorsprungsanordnung angeordnet ist, wobei während des zweiten Schritts die Bodenplatte (3) relativ zum Mantelrohr (1) verdreht wird, bis der Verriegelungsvorsprung (8) senkrecht zur Längsrichtung mit einer Verriegelungsausnehmung (33) der Bodenplatte (3) überlappend angeordnet ist, wobei während des dritten Schritts der Verriegelungsvorsprung (8) so innerhalb der Verriegelungsausnehmung (33) angeordnet wird, dass er senkrecht zur Längsrichtung zwischen Bodenplatte (3) und Mantelrohr (1) eingeschlossen ist.

13. Verfahren nach Anspruch 12,
**dadurch gekennzeichnet, dass**
die Verdrehung der Bodenplatte (3) während des zweiten Schritts ausgehend von der ersten Winkelstellung bis zur zweiten Winkelstellung mindestens 30°, insbesondere weniger als 90°, insbesondere zwischen 45° und 75° beträgt.

## Claims

1. Spring carrier (100, 200) for use in plant engineering for resiliently carrying a load, the spring carrier (100, 200) comprising a casing tube (1) which is designed in the manner of a hollow cylinder, the cylinder axis of which extends in a longitudinal direction and the inner side of the casing of which surrounds a clear tube cross-section, the spring carrier (100, 200) comprising a spring plate (4), a base plate (3) and a spring (5) arranged in an operating situation within the casing tube (1) and in the longitudinal direction between an upper and a lower limiting element, the spring (5) being arranged in the longitudinal direction between the base plate (3) and the spring plate (4), and the spring plate (4) and the base plate (3) each being acted upon by a spring force acting parallel to the longitudinal direction, the spring plate (4) being connected to a support element (6) for resiliently supporting a structural element and being displaceable in the longitudinal direction within a displacement range delimited by the limiting elements,
the lower limiting element comprising a projection arrangement with retaining projections (7) arranged on the inner side of the casing of the casing tube (1), the base plate (3) having a recess arrangement on its outer side facing the inner side of casing of the casing tube (1), the projection arrangement and the recess arrangement being designed to correspond to one another in such a way that in an assembly situation, in which the base plate (3) is arranged in a first angular position relative to the casing tube (1) relative to a rotation about the cylinder axis within the casing tube (1), the projection arrangement perpendicular to the longitudinal direction can be arranged completely next to the base plate (3), and in the operating situation in which the base plate (3) is arranged in a second angular position relative to the casing tube (1), the projection arrangement overlaps with the base plate (3) perpendicularly to the longitudinal direction for receiving a force acting on the base plate (3) from the spring (5),
**characterized in that**
at least one locking projection (8) is arranged within the casing tube (1) and offset upwards from the projection arrangement, wherein the base plate (3) has at least two locking recesses (33) on its outer side facing the inner side of the casing of the casing tube (1) which are spaced apart from one another at a locking angular spacing, the locking projection (8) and the locking recesses (33) being designed to correspond to one another in such a way that, in the assembly situation, the locking projection (8) is arranged perpendicularly to the longitudinal direction within a first of the locking recesses (33) and, in the operating situation, the locking projection (8) is arranged within a second of the locking recesses (33).

2. Spring carrier (100, 200) according to claim 1,
**characterized in that**
the projection arrangement has a plurality of retaining projections (7) which are each spaced apart from one another by a retaining projection angular spacing and/or the recess arrangement has a plurality of recesses (32) which are each spaced apart from one another by a recess angular spacing.

3. Spring carrier (100, 200) according to claim 2,
**characterized in that**
the recesses (32) are distributed regularly over the outside of the base plate (3), in particular the recess angular spacing between all adjacent recesses (32) being identical, and/or the retaining projections (7) being distributed circumferentially regularly over the inner side of the casing of the casing tube (1), in particular the retaining projection angular spacing between all adjacent retaining projections (7) being identical, in particular the recess angular spacing and/or the retaining projection angular spacing being at least 60°, in particular between 90° and 150°.

4. Spring carrier (100, 200) according to one of the preceding claims,
**characterized in that**
the number of retaining projections (7) and/or the number of recesses (32) is at least three, in particular exactly three and in particular a maximum of five, the recesses (32) in particular being of identical design and being spaced apart from one another by the same angular spacing in each case.

5. Spring carrier (100, 200) according to one of the preceding claims
**characterized in that**
the retaining projections (7) and/or the recesses (32) have a circular segment-shaped cross-section perpendicular to the longitudinal direction.

6. Spring carrier (100, 200) according to one of the preceding claims,
**characterized in that**
the casing tube (1) has a circular cross-section, in particular the cross-section of the base plate (3) having a circular shape as an envelope, the recesses (32) being spaced apart from one another by circular arc sections of the enveloping circular shape.

7. Spring carrier (100, 200) according to one of the preceding claims,
**characterized in that**
the first and second of the locking recesses (33) are arranged in an angular portion between two adjacent recesses (32).

8. A spring carrier (100, 200) according to claim 7,
**characterized in that**
the locking angular distance between the first and the second of the locking recesses (33) is between 0.25 and 0.75, in particular 0.5 of the recess angular distance between the two adjacent recesses (32), wherein in each case the angular distance between one of the adjacent recesses (32) and the locking recess (33) adjacent thereto is between 0.2 and 0.4 of said recess angular spacing, in particular half the locking angular spacing, wherein in particular the recess angular spacing between the two adjacent recesses (32) is 120° and the locking angular spacing is 60°.

9. Spring carrier (100, 200) according to one of the preceding claims,
**characterized in that**
the cross-section of the locking projection (8) perpendicular to the longitudinal direction is less than one third of the average cross-section of the retaining projections (7).

10. Spring carrier (200) according to one of the preceding claims,
**characterized in that**
the spring carrier (200) is designed as a spring support (200), the casing tube (1) having a standing plate (12) at its lower end, the standing plate (12) having a recess (120) which forms a section of the inner casing and through which the spring plate (4), the spring (5) and the base plate (3) can be introduced from the outside into the casing tube (1), the support element (6) arranged on the spring plate (4) projecting from the inside of the casing tube (1) at the upper end of the casing tube (1) beyond the casing tube (1), in particular a guide tube (31) which extends upwards from the base plate (3) in the operating situation and which is designed to guide the support element (6) and/or the spring plate (4), is arranged in particular on the base plate (3), in particular the projection arrangement being arranged on the base plate (12) and/or the locking projection (8) being arranged on an inner casing section outside the standing plate (12).

11. Spring carrier (100) according to one of claims 1 to 9,
**characterized in that**
the spring carrier (100) is designed as a spring hanger (100), the base plate (3) having a recess (30) through which the support element (6) projects from the interior of the casing tube (1) at the lower end of the casing tube (1) beyond the casing tube (1), in particular a connecting plate (2) being provided between the spring plate (4) and the upper limiting element (11), which connecting plate (2) bears against the upper limiting element (11) in the operating situation and via which the spring hanger (100) can be mounted on a suspension.

12. Method for producing a spring carrier (100, 200), in which, in a first step, a spring plate (4), a spring (5) and a base plate (3) are successively inserted in a longitudinal direction from the bottom upwards into a hollow cylindrical casing tube (1), the cylinder axis of which casing tube extends in the longitudinal direction, in which method i) during the first step, the base plate (1) is held in a first angular position relative to the casing tube (1) relative to rotation about the cylinder axis, wherein a projection arrangement arranged on an inner side of the casing of the casing tube (1) is arranged perpendicularly to the longitudinal direction completely beside the bottom plate (3) while the bottom plate (3) is inserted into the casing tube (1) under a force applied along the longitudinal direction and compressing the spring (5) against its spring force until it is arranged above the retaining projections (7), wherein
ii) during a second step, the base plate (3) is rotated starting from the first angular position relative to the casing tube (1) until it reaches a second angular position in which the projections (7) overlap with the base plate (3) perpendicularly to the longitudinal direction, wherein
iii) in a third step, the base plate (3) is set down on the projection arrangement while reducing the application of force,
**characterized in that**
during the first step, the bottom plate (3) is inserted along the longitudinal direction into the casing tube (1) until it is arranged above a locking projection (8) arranged on the inner side of the casing of the casing tube (1) above a projection arrangement, wherein during the second step, the bottom plate (3) is rotated relative to the casing tube (1), until the locking projection (8) is arranged to overlap perpendicularly to the longitudinal direction with a locking recess (33) of the base plate (3), wherein during the third step the locking projection (8) is arranged inside the locking recess (33) so that it is enclosed perpendicularly to the longitudinal direction between base plate (3) and casing tube (1).

13. Method according to claim 12,
**characterized in that**,
the rotation of the base plate (3) during the second step, from the first angular position to the second angular position, amounts to at least 30°, in particular less than 90°, in particular between 45° and 75°.

## Revendications

1. Support à ressort (100, 200) destiné à être utilisé dans la construction d'installations pour supporter élastiquement une charge, le support de ressort (100, 200) comprenant un tube d'enveloppe (1) qui est conçu à la manière d'un cylindre creux, dont l'axe du cylindre s'étend dans une direction longitudinale et dont l' intérieure de l'enveloppe entoure une section tubulaire claire, le support de ressort (100, 200) comprenant une plaque de ressort (4), une plaque de base (3) et un ressort (5) disposés dans une situation de fonctionnement à l'intérieur du tube d'enveloppe (1) et dans la direction longitudinale entre un élément de limitation supérieur et inférieur, le ressort (5) étant disposé dans la direction longitudinale entre la plaque de base (3) et la plaque de ressort (4), et la plaque de ressort (4) et la plaque de base (3) étant chacune sollicitées par une force de ressort agissant parallèlement à la direction longitudinale, la plaque de ressort (4) étant reliée à un élément support (6) pour supporter de manière élastique un élément structurel et pouvant se déplacer dans la direction longitudinale dans une plage de déplacement limitée par les éléments de limitation,
l'élément de limitation inférieure comprenant un dispositif de saillie avec des saillies de retenue (7) disposées sur l' intérieure de l'enveloppe du tube d'enveloppe (1), la plaque de base (3) ayant un agencement d'évidement sur son côté extérieur tourné vers l'intérieure de l'enveloppe du tube d'enveloppe (1), le dispositif de saillie et l'agencement d'évidement étant conçus pour correspondre l'un à l'autre de manière telle que dans une situation de montage, dans laquelle la plaque de base (3) est disposée dans une première position angulaire par rapport au tube de base (1) par rapport à une rotation autour de l'axe du cylindre à l'intérieur du tube de base (1), le dispositif de saillie perpendiculaire à la direction longitudinale pouvant être disposé complètement à côté de la plaque de base (3), et dans la situation de fonctionnement dans laquelle la plaque de base (3) est disposée dans une deuxième position angulaire par rapport au tube d'enveloppe (1), le dispositif de saillie chevauchant la plaque de base (3) perpendiculairement à la direction longitudinale pour recevoir une force agissant du ressort (5) sur la plaque de base (3),
**caractérisé en ce que**
au moins une saillie de verrouillage (8) est disposée à l'intérieur du tube d'enveloppe (1) et décalée vers le haut par rapport au dispositif de saillie, la plaque de base (3) présentant au moins deux évidements de verrouillage (33) sur sa face extérieure tournée vers l'intérieure de l'enveloppe du tube d'enveloppe (1) qui sont espacés l'un de l'autre avec un écart angulaire de verrouillage, la saillie de verrouillage (8) et les évidements de verrouillage (33) étant conçus pour correspondre l'un à l'autre de telle sorte que, dans la situation de montage, la saillie de verrouillage (8) est disposée perpendiculairement à la direction longitudinale dans un premier des évidements de verrouillage (33) et, dans la situation de fonctionnement, la saillie de verrouillage (8) est disposée dans un second des évidements de verrouillage (33).

2. Support à ressort (100, 200) selon la revendication 1,
**caractérisé en ce que**
le dispositif de saillie comporte une pluralité de saillies de retenue (7) qui sont chacune espacées les unes des autres par un espacement angulaire de saillie de retenue et/ou l'agencement d'évidement comporte une pluralité d'évidements (32) qui sont chacun espacés les uns des autres par un espacement angulaire d'évidemment.

3. Support à ressort (100, 200) selon la revendication 2,
**caractérisé en ce que**
les évidements (32) sont répartis régulièrement sur l'extérieur de la plaque de base (3), en particulier l'espacement angulaire d'évidement entre tous les évidements adjacents (32) étant identique, et/ou les saillies de retenue (7) étant réparties régulièrement sur le pourtour de l'intérieure de l'enveloppe du tube d'enveloppe (1), en particulier l'espacement angulaire de retenue entre les saillies de retenue (7) étant identique, en particulier l'espacement angulaire d'évidement et/ou l'espacement angulaire de la saillie de retenue étant au moins 60°, en particulier entre 90° et 150°.

4. Support à ressort (100, 200) selon l'une des revendications précédentes,
**caractérisé en ce que**
le nombre de saillies de retenue (7) et/ou le nombre d'évidements (32) est d'au moins trois, en particulier exactement trois, et en particulier un maximum de cinq, les évidements (32) en particulier étant de conception identique et étant espacés les uns des autres par le même espacement angulaire.

5. Support à ressort (100, 200) selon l'une des revendications précédentes
**caractérisé en ce que**
les saillies de retenue (7) et/ou les évidements (32) ont une section transversale en forme de segment de cercle perpendiculaire à la direction longitudinale.

6. Support à ressort (100, 200) selon l'une des revendications précédentes,
**caractérisé en ce que**
le tube d'enveloppe (1) présente une section transversale circulaire, en particulier la section transversale de la plaque de base (3) ayant une forme circulaire en tant qu'enveloppe, les évidements (32) étant espacés les uns des autres par des sections en arc de cercle de la forme circulaire enveloppante.

7. Support à ressort (100, 200) selon l'une des revendications précédentes,
**caractérisé en ce que**
les premier et second des évidements de verrouillage (33) sont disposés sur une partie angulaire entre deux évidements adjacents (32).

8. Support à ressort (100, 200) selon la revendication 7,
**caractérisé en ce que**
la distance angulaire de verrouillage entre le premier et le second des évidements de verrouillage (33) est comprise entre 0,25 et 0,75, en particulier 0,5 de la distance angulaire de l'évidement entre les deux évidements adjacents (32), la distance angulaire entre un des évidements adjacents (32) et l'évidement de verrouillage (33) adjacent étant respectivement comprise entre 0,2 et 0,4 dudit espacement angulaire d'évidement et est en particulier la moitié de l'espacement angulaire de verrouillage, dans lequel en particulier l'espacement angulaire d'évidement entre les deux évidements adjacents (32) est 120° et l'espacement angulaire de verrouillage est 60°.

9. Support à ressort (100, 200) selon l'une des revendications précédentes,
**caractérisé en ce que**
la section transversale de la saillie de verrouillage (8) perpendiculaire à la direction longitudinale est inférieure à un tiers de la section transversale moyenne des saillies de retenue (7).

10. Support à ressort (200) selon l'une des revendications précédentes,
**caractérisé en ce que**
le porteur de ressort (200) est réalisé sous la forme d'un support de ressort (200), le tube d'enveloppe (1) présentant à son extrémité inférieure une plaque de support (12), la plaque de support (12) présentant un évidement (120) qui forme une section de l'enveloppe intérieur et à travers lequel la plaque de ressort (4), le ressort (5) et la plaque de base (3) peuvent être introduits de l'extérieur dans le tube d'enveloppe (1), l'élément porteur (6) disposé sur la plaque de ressort (4) faisant saillie de l'intérieur du tube d'enveloppe (1) à l'extrémité supérieure du tube d'enveloppe (1) au-delà du tube d'enveloppe (1), en particulier un tube de guidage (31) qui s'étend vers le haut à partir de la plaque de base (3) dans la situation de fonctionnement et qui est conçu pour guider l'élément porteur (6) et/ou la plaque de ressort (4), est disposé en particulier sur la plaque de base (3), en particulier le dispositif de saillie étant disposé sur la plaque de base (12) et/ou la saillie de verrouillage (8) étant disposée sur une section intérieure d'enveloppe en dehors de la plaque de support (12).

11. Support à ressort (100) selon l'une des revendications 1 à 9,
**caractérisé en ce que**
le support à ressort (100) est réalisé sous la forme d'un accrochage à support (100), la plaque de base (3) présentant un évidement (30) à travers lequel l'élément de support (6) dépasse de l'intérieur du tube d'enveloppe (1) à l'extrémité inférieure du tube d'enveloppe (1) au-delà du tube d'enveloppe (1), en particulier une plaque de liaison (2) étant prévue entre la plaque de ressort (4) et l'élément de limitation supérieur (11), laquelle plaque de liaison (2) s'applique contre l'élément de limitation supérieur (11) en situation de fonctionnement et par laquelle le support variable (100) peut être montée sur un accrochage.

12. Procédé de fabrication d'un support à ressort (100, 200), dans lequel, dans une première étape, une plaque de ressort (4), un ressort (5) et une plaque de base (3) sont successivement insérés dans une direction longitudinale du bas vers le haut dans un tube d'enveloppe cylindrique creux (1), dont l'axe de cylindre s'étend dans la direction longitudinale, procédé dans lequel i) pendant la première étape, la plaque de base (1) est maintenue dans une première position angulaire relativement au tube d'enveloppe (1) par rapport à une rotation autour l'axe de de cylindre, dans laquelle un dispositif de saillie disposé sur l'enveloppe intérieure du tube d'enveloppe (1) est disposé perpendiculairement à la direction longitudinale complètement à côté de la plaque inférieure (3) tandis que la plaque inférieure (3) est insérée dans le tube d'enveloppe (1) sous une force appliquée dans la direction longitudinale et comprimant le ressort (5) contre sa force élastique jusqu'à ce qu'il soit disposé au-dessus des saillies de retenue (7), dans lequel procédé
ii) pendant une deuxième étape, la plaque de base (3) est tournée à partir de la première position angulaire par rapport au tube d'enveloppe (1) jusqu'à une deuxième position angulaire dans laquelle les saillies (7) se chevauchent avec la plaque de base (3) perpendiculairement à la direction longitudinale, dans lequel procédé,
iii) dans une troisième étape, la plaque de base (3) est posée sur le dispositif de saillie tout en réduisant l'application de la force,
**caractérisé en ce que**
pendant la première étape, la plaque de base (3) est insérée le long de la direction longitudinale dans le tube d'enveloppe (1) jusqu'à ce qu'elle soit disposée au-dessus d'une saillie de verrouillage (8) disposée sur l'intérieure de l'enveloppe du tube d'enveloppe (1) au-dessus du dispositif de saillie, la plaque de fond (3) étant tournée pendant la deuxième étape par rapport au tube d'enveloppe (1), jusqu'à ce que la saillie de verrouillage (8) soit disposée de manière à se chevaucher perpendiculairement à la direction longitudinale avec un évidement de verrouillage (33) de la plaque de base (3), la saillie de verrouillage (8) étant disposée à l'intérieur de l'évidement de verrouillage (33) pendant la troisième étape, de sorte qu'elle soit comprise perpendiculairement à la direction longitudinale entre la plaque de base (3) et le tube d'enveloppe (1).

13. Procédé selon la revendication 12,
**caractérisé en ce que**
la rotation de la plaque de base (3) pendant la deuxième étape à partir de la première position angulaire jusqu'à la deuxième position angulaire est d'au moins 30°, en particulier de moins de 90°, en particulier d'entre 45° et 75°.
